(19) Europäisches Patentamt
European Patent Office
Office européen des brevets

(11) Veröffentlichungsnummer : **0 257 573 B1**

(12) # EUROPÄISCHE PATENTSCHRIFT

(45) Veröffentlichungstag der Patentschrift :
**12.10.94 Patentblatt 94/41**

(51) Int. Cl.$^5$ : **H01B 1/12,** C25B 3/10

(21) Anmeldenummer : **87112128.1**

(22) Anmeldetag : **21.08.87**

(54) **Lösliche, elektrisch leitende Polymere, Verfahren zu ihrer Herstellung und ihre Verwendung.**

(30) Priorität : **26.08.86 DE 3628895**
**26.05.87 DE 3717669**

(43) Veröffentlichungstag der Anmeldung :
**02.03.88 Patentblatt 88/09**

(45) Bekanntmachung des Hinweises auf die Patenterteilung :
**12.10.94 Patentblatt 94/41**

(84) Benannte Vertragsstaaten :
**AT BE CH DE ES FR GB GR IT LI LU NL SE**

(56) Entgegenhaltungen :
**US-A- 4 599 194**
**JOURNAL OF THE CHEMICAL SOCIETY, Chemical Communications, The Royal Society of Chemistry, 1985, Nr. 2, BLANKESPOOR et al. "Polymerized 3-Methoxythiophene ..." Seiten 90-92**

(56) Entgegenhaltungen :
**POLYMER COMMUNICATIONS, Band 26, Nr. 10, Oktober 1985, Butterworth & Co, TANAKA et al. "Electrochemical polymerization of thiophenes containing a methoxy group" Seiten 303-306**
**CHEMICAL ABSTRACTS, Band 105, Nr. 8, 25 August 1986, Columbus, Ohio, USA, TANAKA; SUSUMU; SATO, MASAAKI; KAERIYAMA, KYOJI; SUDA, MASSO; "Organic semiconductive compositions" Seite 18 & JP-A2-61-44921**
**Makromol. Chem. 185, (1984),1295-1306**

(73) Patentinhaber : **HOECHST AKTIENGESELLSCHAFT**
**D-65926 Frankfurt (DE)**

(72) Erfinder : **Feldhues, Michael, Dr.**
**Königsteiner Strasse 1a**
**D-6232 Bad Soden am Taunus (DE)**
Erfinder : **Mecklenburg, Thomas, Dr.**
**Freiherr-vom-Stein-Strasse 20**
**D-6308 Butzbach (DE)**
Erfinder : **Wegener, Peter, Dr.**
**Am Eichkopf 4**
**D-6240 Königstein/Taunus (DE)**
Erfinder : **Kämpf, Günther, Dr.**
**Rebhangstrasse 3**
**D-6227 Oestrich-Winkel (DE)**

**EP 0 257 573 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es ist bekannt, daß sich Heteroaromaten oxidativ, beispielsweise durch anodische Oxidation polymerisieren lassen und dabei elektrisch leitende Polymere bilden, die für die Elektrotechnik, bei Halbleiterbauelementen, Schaltern, Abschirmmaterialien, Solarzellen und als Elektrodenmaterialien bei elektrochemischen Synthesen und in reversiblen Ladungsspeichern Interesse besitzen (vgl. z.B. IBM J. Res. Develop. 27, 330 (1983)).

Der entscheidende Nachteil von allen bisher bekannten elektrisch leitenden Polymeren besteht darin, daß sie nicht schmelzbar, nicht thermoplastisch verarbeitbar und mit wenigen Ausnahmen nicht in einem der üblichen organischen Lösemittel löslich sind.

Die wenigen, im dotierten Zustand teilweise löslichen elektrisch leitenden Polymeren befriedigen hinsichtlich ihrer Löslichkeit, der Langzeitstabilität der elektrischen Leitfähigkeit, der thermischen Beständigkeit und der Filmbildeeigenschaften noch nicht (vgl. Synthetic Metals 15, 169 (1986)).

Schließlich sind auch elektrisch leitende Lösungen von Polymeren substituierter Thiophene bekannt, welche durch einen chemischen Dotiervorgang "in situ", dh. während der Polymerisation hergestellt wurden (vgl. Europäische Anmeldungsveröffentlichung 203 438). Diese Lösungen besitzen jedoch den Nachteil, daß daraus hergestellte leitfähige Artikel zwangsläufig durch Dotiermittel oder deren Reaktionsprodukte verunreinigt sind und Beeinträchtigungen bei den vorgesehenen Anwendungen auftreten können.

Aufgabe der vorliegenden Erfindung war es daher, ein elektrisch leitendes Material in reiner Form bereitzustellen, das zumindest in einigen der üblichen organischen Solventien homogen löslich ist, gute Filmbildeeigenschaften besitzt und eine hohe thermische Beständigkeit besitzt.

Die Erfindung betrifft somit ein intrinsisch elektrisch leitendes Polymeres aus Struktureinheiten, die durch Verknüpfung in 2-Stellung und/oder 5-Stellung miteinander verbunden sind, im statistischen Mittel bestehend aus 60 bis 100 Gew.-% Struktureinheiten, die sich von mindestens einem Monomeren der Formel (I) ableiten

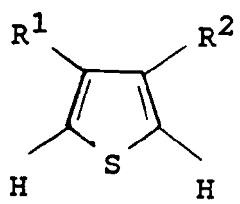

(I),

worin
$R^1$ eine $C_1$-$C_{12}$-Alkoxygruppe oder $-O(CH_2CH_2O)_nCH_3$ mit n = 1 bis 4 und
$R^2$ ein Wasserstoffatom, eine $C_1$-$C_{12}$-Alkylgruppe, eine $C_1$-$C_{12}$-Alkoxygruppe oder $-O(CH_2CH_2O)_nCH_3$ mit n = 1 bis 4 bedeuten,
oder $R^1$ zusammen mit $R^2$ $-O(CH_2)_m-CH_2-$ oder $-O(CH_2)_m-O-$,
worin m = 1 bis 12 ist, darstellt,
0 bis 40 Gew.-% Struktureinheiten, die sich von mindestens einem Monomeren der Formel (II) ableiten

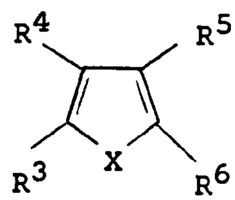

(II),

worin $R^4$ und $R^5$ unabhängig voneinander ein Wasserstoffatom, ein Halogenatom, eine $C_1$-$C_{12}$-Alkylgruppe oder Aryl bedeuten oder zusammen mit den sie verbindenden C-Atomen einen aromatischen Ring bilden,
Elektroanalytische Untersuchungen an 3-Methoxythiophen haben gezeigt, daß diese Verbindung zu einem Produkt oxidierbar ist, das im reduzierten Zustand in einigen organischen Lösemitteln löslich ist (J. Chem. Soc., Chem. Commun. 1985, 90). Darüber hinaus ist bekannt, daß die präparative elektrochemische Polymerisation des 3-Methoxythiophens zu einem schwarzen Pulver mit mäßiger elektrischer Leitfähigkeit führt (Polymer Communications 26, 303 (1985)).

$R^3$ und $R^6$ unabhängig voneinander ein Wasserstoffatom bedeuten oder $R^3$ zusammen mit $R^4$ und den sie verbindenden C-Atomen oder $R^5$ zusammen mit $R^6$ und den sie verbindenden C-Atomen jeweils einen aromatischen Ring bilden, X ein Sauerstoffatom, ein Schwefelatom, eine =NH-Gruppe, eine =N-Alkylgruppe oder

eine =N-Arylgruppe bedeutet, 0 bis 40 Gew.-% Struktureinheiten, die sich von mindestens einem Monomeren der Formel (III) ableiten

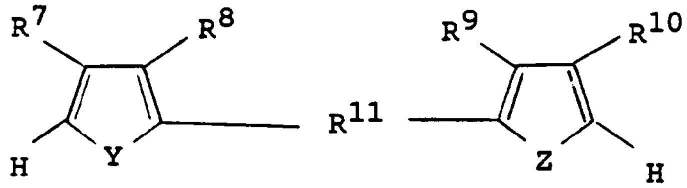

(III),

worin $R^7$, $R^8$, $R^9$ und $R^{10}$ unabhängig voneinander ein Wasserstoffatom, eine $C_1$-$C_{12}$-Alkylgruppe, eine $C_1$-$C_{12}$-Alkoxygruppe oder eine Arylgruppe bedeuten,
Y und Z unabhängig von einander ein Sauerstoffatom, ein Schwefelatom, eine =NH-Gruppe, eine =N-Alkylgruppe oder =N-Arylgruppe bedeuten,
$R^{11}$ eine Arylengruppe, eine Heteroarylengruppe oder ein konjugiertes System der Formel $(CH=CH)_o$ , worin o null, 1, 2 oder 3 ist, bedeutet,
0 bis 40 Gew-% Struktureinheiten, die sich von mindestens einem Monomeren der Formel (IV) ableiten

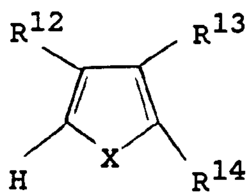

(IV),

worin $R^{12}$ und $R^{13}$ unabhängig voneinander ein Wasserstoffatom, ein Halogenatom, eine $C_1$-$C_{12}$-Alkylgruppe, eine $C_1$-$C_{12}$-Alkoxygruppe, eine $C_1$-$C_4$-Alkylaminogruppe oder eine $C_1$-$C_4$-Acylaminogruppe,
$R^{14}$ ein Halogenatom, eine $C_1$-$C_{12}$-Alkylgruppe, eine $C_1$-$C_{12}$-Alkoxygruppe, eine $C_1$-$C_4$-Alkylaminogruppe oder eine $C_1$-$C_4$-Acylaminogruppe bedeuten und X die oben angegebene Bedeutung hat,
wobei das Polymere in der oxidierten Form in dipolar aprotischen Lösemitteln bei 25 °C vollständig löslich ist und Lösungen mit einem Gehalt von mindestens 0,1 g des Polymeren in 100 ml Lösemittel bei 25 °C erhalten werden.

Weiterhin betrifft die Erfindung ein Verfahren zur Herstellung des intrinsich elektrisch leitenden Polymeren durch elektrochemische Polymerisation von mindestens einem Monomeren der Formel (I), gegebenenfalls zusammen mit Comonomeren, in Gegenwart eines Leitsalzes, dadurch gekennzeichnet, daß die Anode eine spezifische Oberfläche von mindestens 0,01 $m^2/g$ aufweist, das Elektrolyt-Lösemittel dipolar aprotisch ist und das Elektrolytsystem relativ zur Anode nicht oder nur schwach bewegt wird.

Die erfindungsgemäßen Polymeren enthalten Struktureinheiten, welche sich durch Verknüpfung in 2-Stellung und/oder 5-Stellung von mindestens einem Monomeren der allgemeinen Formel (I) ableiten

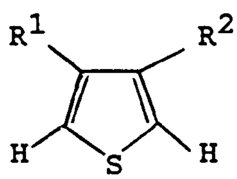

(I),

worin
$R^1$ eine $C_1$-$C_{12}$-, vorzugsweise $C_1$-$C_4$-, insbesondere $C_1$-$C_2$-Alkoxygruppe oder $-O(CH_2CH_2O)_nCH_3$ mit n = 1 bis 4, vorzugsweise 1 oder 2, bedeutet und
$R^2$ ein Wasserstoffatom, eine $C_1$-$C_{12}$-, vorzugsweise $C_1$-$C_4$-Alkoxygruppe, insbesondere $C_1$-$C_2$-Alkoxygruppe, eine $C_1$-$C_{12}$-, vorzugsweise $C_1$-$C_4$-Alkylgruppe oder $-O(CH_2CH_2O)_nCH_3$ mit n = 1 bis 4, vorzugsweise 1 oder 2, bedeutet oder $R^1$ zusammen mit $R^2$ $-O(CH_2)_m-CH_2-$ oder $-O(CH_2)_m-O-$ mit m = 1 bis 12, vorzugsweise 1 bis 4, darstellt.

Beispiele für Vertreter der Formel (I) sind 3-Methoxythiophen, 3-Ethoxythiophen, 3-Propoxythiophen, 3-Methoxy-4-methylthiophen, 3-Methoxy-4-ethylthiophen, 3-Methoxy-4-butylthiophen, 3-Ethoxy-4-methylthiophen, 3-Ethoxy-4-ethylthiophen, 3,4-Dimethoxythiophen, 3-Ethoxy-4-methoxythiophen, 3-Butoxy-4-methoxythiophen, 3-(Methoxyethoxy)thiophen, 3-(Methoxyethoxyethoxy)thiophen, 3,4-(Ethylen-1,2-dioxy)thiophen und 3,4-(Prop-3-ylen-1-oxy)thiophen. Auch Gemische der Monomeren (I) können eingesetzt werden.

Als Comonomere für die Monomeren (I) kommen alle Aromaten und Heteroaromaten in Frage, die elektrisch leitende Polymere bilden können und mit den Monomeren (I) copolymerisierbar sind. Beispielsweise seien hier genannt Verbindungen der Formel (II)

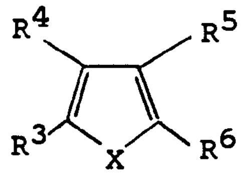

(II).

$R^4$ und $R^5$ sind unabhängig voneinander ein Wasserstoffatom, ein Halogenatom, eine $C_1$-$C_{12}$-, vorzugsweise $C_1$-$C_4$-Alkylgruppe, eine Arylgruppe, vorzugsweise Phenyl oder Thienyl, oder bilden zusammen mit den sie verbindenden C-Atomen einen aromatischen Ring, vorzugsweise einen Benzol-, Thiophen- oder Pyrrolring.

$R^3$ und $R^6$ sind unabhängig voneinander ein Wasserstoffatom oder bilden jeweils mit $R^4$ oder $R^5$ zusammen mit den sie verbindenden C-Atomen einen aromatischen Ring, vorzugsweise einen Benzol-, Thiophen- oder Pyrrolring.

X bedeutet ein O-Atom, ein S-Atom, eine =NH-Gruppe, eine =N-Alkylgruppe, vorzugsweise =N-$C_1$-$C_4$-Alkyl, oder N-Aryl, vorzugsweise N-Phenyl.

Geeignet sind Pyrrol, 3-Chlorpyrrol, 3-Methylpyrrol, 3,4-Dimethylpyrrol, N-Methylpyrrol, Thieno[3,2-b]pyrrol, Carbazol, Thiophen, 3-Methylthiophen, 3-Octylthiophen, 3,4-Dimethylthiophen, 3,4-Diethylthiophen, Isothianaphthen und Thieno[2,3-b]thiophen, Dithieno[3,2-b; 2′,3′-d]thiophen, Dibenzothiophen, vorzugsweise Pyrrol und 3-Methylthiophen.

Weiterhin kommen als Comonomere für Monomere (I) solche der Formel (III) in Betracht:

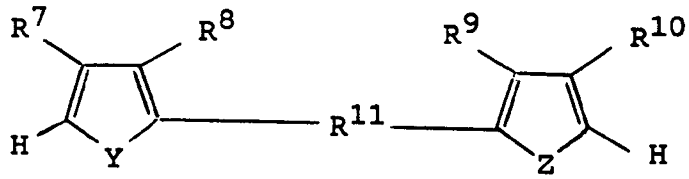

(III),

$R^7$, $R^8$, $R^9$ und $R^{10}$ sind unabhängig voneinander ein Wasserstoffatom, eine $C_1$-$C_{12}$-, vorzugsweise $C_1$-$C_4$-Alkylgruppe, eine $C_1$-$C_{12}$-Alkoxygruppe, vorzugsweise $C_1$-$C_4$-Alkoxy, oder eine Arylgruppe, vorzugsweise Phenyl oder Thienyl. Y und Z bedeuten unabhängig voneinander ein O-Atom, ein S-Atom, eine =NH-Gruppe, eine =N-Alkylgruppe, vorzugsweise =N-$C_1$-$C_4$-Alkyl, oder eine =N-Arylgruppe, vorzugsweise =N-Phenyl. $R^{11}$ steht für Arylen, vorzugsweise Phenylen, Heteroarylen, vorzugsweise Thienylen, Furanylen, Pyrrolylen oder ein konjugiertes System der Formel

$$(CH=CH)_o$$

mit o = 0, 1, 2 und 3.

Geeignet sind insbesondere 1,2-Di-(2-thienyl)ethen, 1,2-Di-(3-methylthien-2-yl)ethen, 1,2-Di-(2-furanyl)ethen, 1-(2-Furanyl)-2-(2-thienyl)ethen, 1-(2-Pyrrolyl)-2-(2-thienyl)ethen, 1,4-Di-(2-thienyl)-buta-1,3-dien, 1,4-Di-(2-furanyl)-buta-1,3-dien, 1,4-Di-(2-thienyl)benzol, Terthienyl (2,5-Di-(2-thienyl)thiophen), 2,5-Di-(2-thienyl)-pyrrol, 2,2′-Bithiophen, 3,3′-Dimethyl-2,2′-bithiophen, 3,3′-Dimethoxy-2,2′-bithiophen, 3,4′-Dimethoxy-2,2′-bithiophen, 4,4′-Dimethoxy-2,2′-bithiophen.

Die vorstehenden Comonomeren (II) und (III) können auch in Mischung untereinander verwendet werden. Die Herstellung der Verbindungen (II) und (III) ist aus dem Stand der Technik bekannt.

Die erfindungsgemäßen Polymeren enthalten vorzugsweise drei bis zehn Struktureinheiten, insbesondere vier bis neun Struktureinheiten und ganz besonders bevorzugt fünf oder sechs Struktureinheiten. Die Menge der Struktureinheiten, die sich von mindestens einem Monomeren der Formel (I) ableiten, beträgt im statistischen Mittel 60 bis 100 Gew.-%, vorzugsweise 90 bis 100 Gew.-% und insbesondere 95 bis 100 Gew.-%, bezogen auf die im undotierten Polymeren vorhandenen Struktureinheiten.

Die Menge der Struktureinheiten, die sich von Monomeren der Formel (II) ableiten, beträgt im statistischen Mittel 0 bis 40, vorzugsweise 0 bis 10 Gew.-%, die sich von Monomeren der Formel (III) ableitenden Struktureinheiten sind im statistischen Mittel zu 0 bis 40, vorzugsweise 0 bis 10 Gew.-% vorhanden.

Weiterhin können die Endgruppen der erfindungsgemäßen Polymeren von Struktureinheiten der Monomeren (IV) gebildet werden, welche zur Modifizierung des Polymerisationsgrades und der physikalischen Eigenschaften zu den Monomeren der allgemeinen Formel (I) zugesetzt werden können.

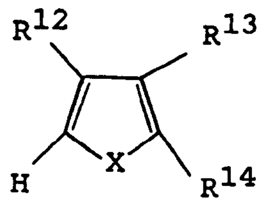

(IV),

$R^{12}$ und $R^{13}$ sind unabhängig voneinander ein Wasserstoffatom, ein Halogenatom, vorzugsweise Chlor oder Brom, eine $C_1$-$C_{12}$-, vorzugsweise $C_1$-$C_4$-Alkylgruppe, eine $C_1$-$C_{12}$-, vorzugsweise $C_1$-$C_4$-Alkoxygruppe, eine $C_1$-$C_4$-Alkylaminogruppe oder eine $C_1$-$C_4$-Acylaminogruppe, vorzugsweise Acetylamino. $R^{14}$ ist ein Halogenatom, eine $C_1$-$C_{12}$-, vorzugsweise $C_1$-$C_4$-Alkylgruppe, eine $C_1$-$C_{12}$-, vorzugsweise $C_1$-$C_4$-Alkoxygruppe, eine $C_1$-$C_4$-Alkylaminogruppe oder eine $C_1$-$C_4$-Acylaminogruppe, vorzugsweise Acetylamino.

X hat die oben angegebene Bedeutung.

Beispiele für Verbindungen der Formel (IV) sind 2-Methoxythiophen, 2-Methylthiophen, 2-Bromthiophen, 2-Chlorthiophen, 2-Acetylaminothiophen, 2-Brom-3-methoxythiophen, 2-Brom-4-methoxythiophen, 2-Chlor-3-methylthiophen, 2,3-Dimethoxythiophen, 2,4-Dimethoxythiophen, 2,3-Dimethylthiophen, 3-Methoxy-2-methylthiophen, 2-Methoxy-3-methylthiophen und 4-Methoxy-2-methylthiophen, 2-Chlor-4-methoxythiophen, 2-Acetylamino-3-methoxythiophen, 2-Methylpyrrol, 2-Brompyrrol, 2-Chlorpyrrol, 2-Methylfuran, 2-Methoxyfuran. Aufgrund der Substitution in der 2-Stellung wirken diese Verbindungen kettenabbrechend. Die Menge an (IV) beträgt in der Regel 0 bis 40 Gew.-%, vorzugsweise weniger als 10 Gew.-% und insbesondere weniger als 5 Gew.-%, bezogen auf die Gesamtmenge an Monomeren.

Die löslichen, elektrisch leitenden Polymeren enthalten in der oxidierten Form zur Kompensation der positiven Ladungen eine entsprechende Zahl von Anionen. Dabei handelt es sich vorzugsweise um die Anionen des Leitsalzes, das beim Herstellungsverfahren eingesetzt wurde. Als Beispiele für geeignete Anionen seien hier genannt: $BF_4^-$, $PF_6^-$, $SbF_6^-$, $SbCl_6^-$, $FeCl_4^-$′ $Fe[(CN)_6)]^{3-}$, $F^-$, $Cl^-$, $Br^-$, $SCN^-$, $SO_4^{2-}$, $HSO_4^-$, $PO_4^{3-}$, Alkyl-$SO_3^-$, Perfluoralkyl-$SO_3^-$, Aryl-$SO_3^-$, Alkyl-$CO_2^-$, Perfluoralkyl-$CO_2^-$, Aryl-$CO_2^-$, Phenolat. Unter Verlust der thermischen Stabilität kommen auch $ClO_4^-$ und $NO_3^-$ in Frage. Bevorzugt sind erfindungsgemäß $BF_4^-$, $PF_6^-$ und $CF_3SO_3^-$. Es können auch Gemische der oben genannten in das Polymere eingebrachten Anionen vorliegen. Die Zahl dieser Anionen, bezogen auf die Zahl der Monomereinheiten, beträgt zumeist 10 bis 30 %, vorzugsweise 15 bis 25 %.

Die Herstellung der erfindungsgemäßen Polymeren erfolgt durch oxidative Polymerisation, vorzugsweise durch elektrochemische (anodische) Polymerisation der Monomeren mittels bestimmter Anoden und unter bestimmten Elektrolysebedingungen.

Wesentlich für das erfindungsgemäße Verfahren ist zunächst das Anodenmaterial in Verbindung mit der spezifischen Oberfläche und Geometrie der eingesetzten Anode, da dadurch in erheblichem Maße der Polymerisationsgrad und somit die Eigenschaften der entstehenden Produkte bestimmt werden. So ist es erforderlich, eine Elektrodenform zu wählen, die eine große spezifische Oberfläche mit vielen Hohlräumen bietet. Die spezifische Oberfläche der erfindungsgemäßen Anodenmaterialien liegt daher im Bereich von 0,01 bis 100 $m^2/g$, vorzugsweise im Bereich von 0,1 bis 10 $m^2/g$, insbesondere 0,2 bis 5 $m^2/g$. Als besonders geeignet erweisen sich für den erfindungsgemäßen Zweck Anoden, die aufgrund ihrer strukturierten (nichtglatten) Geometrie ein großes inneres Volumen umschließen, wie beispielsweise netz-, schwamm-, gewebe-, waben- und filzartige Formen, in deren Hohlräumen sich die gebildeten Produkte gut absetzen können. Als Anodenmaterial kommen die unter den Bedingungen der anodischen Polymerisation stabilen Materialien wie Edelmetalle, beispielsweise Platin, Gold oder Edelmetall-Legierungen in Betracht. Beispiele hierfür sind ein- und mehrlagige Netze aus Platin oder Platin-Rhodium-Legierungen. Bevorzugt sind jedoch Materialien aus Kohlenstoff, insbesondere aus Pyrolysekohlenstoff. Beispiele für bevorzugte Anodenmaterialien sind Hart- und Weichfilze sowie mehrlagige Gewebe aus Kohlenstoff-Fasern. Vorzugsweise wird eine Anordnung der Anoden mit paralleler Ausrichtung zur Kathode gewählt. Bei Verwendung von zwei Anoden befinden sich diese in gleichem Abstand vor und hinter der Kathode.

Die Kathode besteht aus einem der üblichen Elektroden-Materialien wie z.B. Platin, Gold, Nickel, Kupfer,

Silber, Graphit oder Glaskohlenstoff, vorzugsweise aus Edelstahl. Sie kann in Form von Platten, Blechen oder Netzen eingesetzt werden und wird im allgemeinen parallel zur Anode angeordnet. Bei Verwendung von zwei Kathoden befinden sich diese in gleichem Abstand vor und hinter der Anode. Um einen Kurzschluß zu verhindern, kann die Kathode über einen Abstandshalter, der z.B. aus einem inerten Kunststoffnetz besteht, von der Anode getrennt werden.

Damit die Abscheidung der Polymeren auf der Anode ermöglicht wird und das gebildete Produkt nicht wieder sofort im Elektrolyt vollständig in Lösung geht, darf im Gegensatz zu üblichen Elektrolysebedingungen bei dem erfindungsgemäßen Verfahren weder stärker gerührt noch stärker geströmt werden. Durch diskontinuierliches Rühren des Elektrolyten bzw. langsame kontinuierliche oder diskontinuierliche Strömung des Elektrolyten oder langsame kontinuierliche oder diskontinuierliche Rotation der Elektroden kann der ansonsten diffusionskontrollierte Stofftransport der Monomeren an die Anode unterstützt werden. Die Strömungsgeschwindigkeit des Elektrolyten relativ zur Anode ist kleiner als 1 cm/s, vorzugsweise kleiner als 0,5 cm/s und insbesondere kleiner als 0,1 cm/s. Die oben beschriebenen voluminösen Anoden, die ein großes Raumelement des Elektrolyten umschließen, begünstigen den Stofftransport infolge der kurzen Diffusionswege und ermöglichen gegebenenfalls eine Reaktionsführung vollständig ohne Rühren bzw. Strömen.

Die elektrochemische Polymerisation der Monomeren bzw. der Monomer-Mischungen wird in einem dipolar aprotischen Elektrolyt-Lösemittelsystem durchgeführt. Dieses soll neben der Beständigkeit unter den Bedingungen der elektrochemischen Polymerisation und ausreichenden Lösungseigenschaften für Monomer und Leitsalz auch gewisse Lösungseigenschaften für die zu synthetisierenden Polymeren in ihrer oxidierten Form besitzen, so daß letztere nicht die Oberfläche der Elektrode dauerhaft belegen und damit die Bildung höhermolekularer und damit unlöslicher Endprodukte fördern sowie den Transport von Monomeren zur Anodenoberfläche behindern, sondern anquellen und sich in Form schlammiger Massen in den Hohlräumen und an der Peripherie der erfindungsgemäß eingesetzten Anode ablagern. Geeignete Elektrolyt-Lösemittel sind beispielsweise Acetonitril, Benzonitril, Propylencarbonat, Nitrobenzol, Nitromethan und Schwefeldioxid sowie Mischungen dieser Lösemittel, gegebenenfalls auch mit anderen unter den Bedingungen der elektrochemischen Polymerisation stabilen Lösemitteln wie beispielsweise Methylenchlorid und Tetrahydrofuran. Ein Zusatz von weniger als fünf Prozent eines polar protischen Lösemittels, wie Wasser, Methanol oder der dem Leitsalz zugrunde liegenden Säure kann zuweilen von Vorteil sein.

Als Leitsalze, die dem Stromtransport während der elektrochemischen Polymerisation dienen, die Löslichkeit des abgeschiedenen Polymeren in dem Elektrolyt-Lösemittelsystem steuern, deren Anionen in die Polymeren eingebaut werden und deren Eigenschaften, wie Thermostabilität, Löslichkeit und elektrische Leitfähigkeit beeinflussen können, finden die an sich üblichen Verbindungen Verwendung. Genannt seien hier beispielsweise Tetrafluoroborate, Hexafluoroantimonate, Hexafluoroarsenate, Hexafluorophosphate, Hexachloroantimonate, Perchlorate und Perfluoralkylsulfonate. Bevorzugt sind dabei Tetrafluoroborate, Hexafluorophosphate und Trifluormethansulfonate. Es können auch Gemische dieser Leitsalze verwendet werden. Besonders bevorzugt sind Tetraalkylammoniumtetrafluoroborate.

Als Kationen für die Leitsalze sind neben den Erdalkalimetallkationen und $H^+$ insbesondere die Alkalimetallkationen geeignet. Als besonders günstig erweisen sich Kationen des Typs $R_4N^+$ bzw. $R_4P^+$, worin die Reste R jeweils unabhängig voneinander Wasserstoff, $C_1$-$C_6$-Alkylreste, cycloaliphatische oder aromatische Reste bedeuten. Die Menge an Leitsalz liegt im allgemeinen zwischen 0,01 und 1 Mol, vorzugsweise 0,05 und 0,5 Mol pro Liter Lösemittel. Mittlere bis hohe Leitsalzkonzentrationen begünstigen dabei im allgemeinen die Ausbeute an erfindungsgemäßen Polymeren.

Die Monomerkonzentration, die Bedeutung besitzt für den Polymerisationsgrad der erfindungsgemäßen Polymeren, beträgt 0,01 bis 5 Mol, vorzugsweise 0,05 bis 1 Mol Monomere pro Liter Elektrolyt-Lösemittel. Bei Comonomer-Mischungen ist der Anteil der Monomeren (I) im allgemeinen größer als 60 %, vorzugsweise größer als 90 % und insbesondere größer als 95 %, bezogen auf die Gesamtmenge an Monomeren.

Die elektrochemische Polymerisation wird vorzugsweise bei Raumtemperatur durchgeführt. Die Temperatur kann allerdings auch in einem größeren Bereich variiert werden, der nach unten durch die Erstarrungstemperatur und nach oben durch die Siedetemperatur des Elektrolyt-Lösemittelsystems begrenzt wird und zumeist im Bereich von -60 bis 80 °C, vorzugsweise -20 bis 50°C liegt. Die größten Ausbeuten werden im allgemeinen bei einer Temperatur von -10 bis 40°C erreicht.

Die Dauer der Elektrolyse hängt ab von dem verwendeten Elektrolyt-System, den jeweiligen Elektrolyse-Bedingungen und insbesondere der eingesetzten Menge der Monomeren. Üblicherweise beträgt die Elektrolysedauer 1 bis 12 Stunden, vorzugsweise 2 bis 8 Stunden.

Die elektrochemische Polymerisation kann in den üblichen Zellen oder Elektrolyse-Apparaturen durchgeführt werden. Gut geeignet sind beispielsweise einfache Elektrolyse-Apparaturen, bestehend aus einer ungeteilten Zelle, zwei oder mehr Elektroden und einer externen Strom-Spannungsquelle. Es können aber auch geteilte Zellen mit Diaphragmen oder Ionenaustauschermembranen oder solche mit Referenzelektroden zur

exakten Potentialbestimmung eingesetzt werden. Die Messung des Stromverbrauchs ist zweckmäßig, da dies eine Abschätzung der bereits verbrauchten Monomermenge ermöglicht. Eine Elektrolyse-Apparatur, bei der die Kathode flächig am Boden ausgebildet ist und die Anode in Form eines Bandes mit konstantem Vorschub durch den Elektrolyt geführt wird, ermöglicht eine kontinuierliche Verfahrensführung.

Als Strom-Spannungsquelle für den Betrieb der elektrolytischen Zelle, in der das erfindungsgemäße Verfahren durchgeführt wird, eignet sich jede Gleichstrom-Spannungsquelle, die eine hinreichend hohe elektrische Spannung liefert. Üblicherweise wird die elektrochemische Polymerisation mit einer Spannung von 0,1 bis 100 Volt, vorzugsweise im Bereich von 1,5 bis 30 Volt betrieben. Für die Stromdichte haben sich Werte von 0,0002 bis 50 $mA/cm^2$, vorzugsweise 0,001 bis 10 $mA/cm^2$ und insbesondere 0,01 bis 1 $mA/cm^2$ spezifischer Oberfläche als günstig und vorteilhaft erwiesen.

Zur Isolierung und Reinigung der löslichen Polymeren werden die Elektrolyse-Rohprodukte gegebenenfalls mitsamt der als Träger dienenden Anode durch Waschen mit Lösemitteln, in denen die Polymeren unlöslich sind, wie Methylenchlorid, Tetrahydrofuran, Ethanol und Wasser, von Leitsalzen, Monomeren und anhaftenden Verunreinigungen befreit. Anschließend werden die vorgereinigten Produkte vorzugsweise mit dem Träger in einem Lösemittel digeriert, in dem die Polymeren löslich sind. Eventuell in der Lösung suspendierte Verunreinigungen werden mittels bekannter Methoden wie Filtrieren, Zentrifugieren und Dekantieren abgetrennt und die reinen Polymeren dann durch Abdampfen des Lösemittels erhalten. Nach dem erfindungsgemäßen Verfahren sind Ausbeuten von etwa 50 bis 80 % möglich.

Im Gegensatz zu bekannten elektrisch leitenden Polymeren in Pulver- oder Filmform, die durch elektrochemische Oxidation von 3-Methoxythiophen an glatten Elektroden unter Standardelektrolysebedingungen erhalten werden, sind die erfindungsgemäßen Polymeren insbesondere in der oxidierten, d.h. elektrisch leitenden Form mit einem Dotierungsgrad von mindestens 10 % in vielen dipolar aprotischen Lösemitteln vollständig und reversibel löslich und unterscheiden sich durch ihre Struktur, ihre Eigenschaften sowie durch ihre Verwendungsmöglichkeiten von den bisher bekannten leitenden Polymeren.

Als Lösemittel für die erfindungsgemäßen, im Festzustand bronzemetallisch glänzenden Polymeren eignen sich dipolar aprotische Lösemittel oder Lösemittelgemische, die einen $\delta_p$-Wert größer 3,5 $(cal/ccm)^{1/2}$ und einen $\delta_H$-Wert kleiner 6,5 $(cal/ccm)^{1/2}$ nach Hansen aufweisen, wie Aceton, Acetonitril, Acrylnitril, Benzaldehyd, Benzonitril, γ-Butyrolacton, ε-Caprolacton, Crotonaldehyd, Cyanessigsäuremethylester, N-Methylformamid, N,N-Dimethylformamid, Dimethylsulfoxid, Diethylsulfat, Furfural, Nitropropan, Propionitril, Triethylphosphat, 3-Methoxypropionitril, N-Methylpyrrolidon, Nitrobenzol, Nitromethan, Propylencarbonat, Schwefeldioxid (-10°C), Sulfolan, vorzugsweise Acetonitril, Acrylnitril, Benzonitril, γ-Butyrolacton, Diethylsulfat, Furfural, N-Methylpyrrolidon, Nitromethan, Nitropropan, Propionitril, Propylencarbonat und Schwefeldioxid (-10°C). Bei Lösemittelgemischen, die auch Nichtlöser enthalten können, sind die resultierenden δ-Werte nach der in der Literatur angegebenen Weise zu berechnen. Die δ-Werte sind in Barton, Handbook of Solubility Parameters and other Cohesion Parameters, CRC Press, 1983, Seite 153-161, aufgeführt. Vorzugsweise werden Lösemittel oder Lösemittelgemische eingesetzt, deren $\delta_p$-Wert größer 5,5 $(cal/ccm)^{1/2}$ und deren $\delta_H$-Wert kleiner 5,0 $(cal/ccm)^{1/2}$ ist. Nachstehend die Werte bevorzugter Lösemittel:

| | $\delta_P$ | $\delta_H$ |
|---|---|---|
| Furfural | 7,45 | 2,55 |
| Propylencarbonat | 9,0 | 2,05 |
| γ-Butyrolacton | 8,3 | 3,7 |
| Diethylsulfat | 7,35 | 3,6 |
| Triethylphosphat | 5,75 | 4,6 |
| Acetonitril | 9,0 | 3,05 |
| Acrylnitril | 8,7 | 3,4 |
| Propionitril | 7,15 | 2,75 |
| Nitromethan | 9,4 | 2,55 |
| Nitropropan | 6,05 | 2,05 |
| N-Methyl-pyrrolidon | 6,15 | 3,6 |

Je nach Lösemittel können mindestens 0,1 g, vorzugsweise mindestens 1,0 g elektrisch leitende Polymere in 100 ml Lösemittel gelöst werden, wobei blaue Lösungen entstehen.

Die elektrische Leitfähigkeit der erfindungsgemäßen Polymeren beträgt $10^{-4}$ bis 100 S/cm, insbesondere $10^{-3}$ bis 10 S/cm. Das UV/VIS/NIR-Spektrum der Oligomeren zeigt eine intensive Absorption im Bereich von 550 bis 1000 nm, insbesondere im Bereich von 600 bis 900 nm. Die thermische Stabilität der erfindungsgemäßen Polymeren ist hoch. Dies zeigt sich daran, daß sie ohne Zersetzung auf Temperaturen bis zu 150 °C, vorzugsweise bis zu 200 °C und insbesondere bis zu 250 °C erhitzt werden können.

Die besonderen Eigenschaften, durch die sich die erfindungsgemäßen Polymeren von den bekannten leitenden Polymeren unterscheiden, ermöglichen ihren Einsatz auch für Anwendungen, für die eine Löslichkeit und damit Verarbeitbarkeit notwendig oder von Vorteil ist. Genannt seien hier das Einmischen in handelsübliche Polymere oder das Aufbringen elektrisch leitender Schichten, gegebenenfalls definierter Dicke auf leitende und nicht leitende Materialien. Durch diese Verfahren kann die Herstellung von Katalysatoren, elektrischen Schaltern, Halbleiter-Bauteilen, Solarzellen, Abschirmmaterialien, Tarnanstrichen, Flächenheizleitern, Spezialelektroden und insbesondere von leitenden oder antistatischen Folien und Fasern ermöglicht oder vereinfacht werden.

Die Erfindung wird durch die nachfolgenden Beispiele näher erläutert. Die in den Beispielen angegebenen Teile und Prozente beziehen sich, sofern nicht anders vermerkt, auf das Gewicht. Die spezifische Leitfähigkeit wurde mittels Vierpunktmessung an Preßlingen bestimmt. Das thermische Zersetzungsverhalten wurde durch Differentialthermogravimetrie (DTG) und Differentialscanningkalorimetrie (DSC) bestimmt. Die in den Beispielen 1 bis 11 erhaltenen gereinigten Polymeren waren in Acetonitril bei 25 °C zu mehr als 0,5 g je 100 ml löslich. Diese Lösungen besaßen eine reduzierte Viskosität von 0,09 bis 0,1 dl/g. Im UV/VIS/NIR-Spektrum zeigten sie ein ausgeprägtes Maximum bei einer Wellenlönge von $\lambda$ = 750 bis 775 nm. Die in den Beispielen 12 bis 21 erhaltenen gereinigten Oligomeren waren in Acetonitril bei 25 °C zu mehr als 1,0 g je 100 ml löslich. Lösungen in Acetonitril zeigten im UV/VIS/NIR-Spektrum ein ausgeprägtes Maximum bei einer Wellenlänge von $\lambda$ = 760 nm mit einem Extinktionskoeffizienten von $\varepsilon$ = 40000. Die einzelnen Molekulargewichte und die Molekulargewichtsverteilung der erfindungsgemäßen Oligomeren wurden an der neutralen (undotierten) Form, die beispielsweise durch elektrochemische Reduktion an einer Platin-Kathode bei -0,3 V (vs. Ag/AgCl) erhalten wurde, mittels Massenspektroskopie (MS) und Gelpermeationschromatographie (GPC) bestimmt. Die UV/VIS/NIR-Spektren der neutralen (undotierten) Oligomeren wurden am Eluat der GPC mittels eines Diodenarray-Spektrometers "on line" gemessen.

Beispiel 1

4,34 Teile Tetraethylammoniumtetrafluoroborat, 4,56 Teile 3-Methoxythiophen und 250 Teile Acetonitril wurden in eine ungeteilte Elektrolysezelle mit Kühlmantel gegeben. Die Kathode bestand wahlweise aus Platin- oder V2A-Stahl-Blechen von 80 mm Länge und 55 mm Breite. Als Anode wurde ein Kohlenstoff-Filz (Flächengewicht 0,35 kg/$m^2$; spez. Oberfläche (BET) ca. 0,5 $m^2$/g) von 80 mm Länge und 55 mm Breite eingesetzt (beidseitige geometrische Fläche ca. 90 $cm^2$). Die Anode wurde in einem Abstand von 2 cm parallel zur Kathode befestigt, getrennt über einen Abstandshalter aus Polypropylen-Netz. Bei einer Elektrolysetemperatur von 25°C und einem Anodenstrom von 400 mA war eine Zellenspannung von 5 bis 11 Volt erforderlich. Nach einem Drittel der theoretisch benötigten Strommenge wurde die mit dem Polymeren beladene Anode gegen eine neue ausgetauscht. Nach Verbrauch von zwei Dritteln der theoretisch benötigten Strommenge wurde die Anode erneut ausgetauscht, und nach Verbrauch der theoretischen Strommenge wurde die Elektrolyse beendet. Die mit dem Rohprodukt beladenen Anoden wurden jeweils sofort nach dem Austausch in ein Bad mit Methylenchlorid gestellt und dort längere Zeit digeriert. Sie wurden nacheinander mit Methylenchlorid und Wasser gewaschen, bis die Waschlösungen praktisch farblos blieben. Nach dem Trocknen wurden die mit dem Polymeren beladenen Kohlenstoff-Filze in einem Bad mit Acetonitril solange digeriert, bis das Polymere praktisch vollständig in Lösung gegangen war. Die tief dunkelblaue Lösung wurde 0,5 h bei 10000 U/min zentrifugiert und die überstehende Lösung im Rotationsverdampfer zur Trockene eingeengt. Es wurden 1,92 Teile eines bronzemetallisch glänzenden Feststoffs erhalten. Die Elementaranalyse lieferte folgende Werte: 45,3 % C, 3,4 % H, 21,1 % S, 10,1 % F. Ein Pulverpreßling des gemahlenen Produkts besaß eine spezifische Leitfähigkeit von $4 \cdot 10^{-4}$ S/cm. Bei der TG wurde bis 215 °C ein Gewichtsverlust von weniger als 10 % beobachtet. Die DSC zeigte ein exothermes Maximum bei 315 °C. Mittels GPC der undotierten Form ließen sich Polymere mit einem Polymerisationsgrad größer als sechs nachweisen, deren UV/VIS-Spektrum ein Maximum bei $\lambda$ = 466 nm zeigte.

Beispiel 2

4,52 Teile 3-Methoxythiophen, 0,045 Teile 2-Methoxythiophen, 4,34 Teile Tetraethylammoniumtetrafluoroborat und 250 Teile Acetonitril wurden in ungeteilter Zelle gemäß Beispiel 1 elektrolysiert und aufgearbeitet, jedoch wurde nicht mit Wasser gewaschen. Es wurden 1,7 Teile eines bronzemetallisch glänzenden Feststoffs erhalten. Die Elementaranalyse lieferte folgende Werte: 44,5 % C, 3,4 % H, 22,5 % S, 10,2 % F. Ein Pulverpreßling des gemahlenen Produkts besaß eine spezifische Leitfähigkeit von $2 \cdot 10^{-3}$ S/cm. Bei der TG wurde bis 200 °C ein Gewichtsverlust von weniger als 10 % beobachtet. Die DSC zeigte ein exothermes Maximum bei 340 °C. Die reduzierte Viskosität betrug 0,094 dl/g.

Beispiel 3

11,3 Teile 3-Methoxythiophen, 0,11 Teile 2-Methoxythiophen, 10,8 Teile Tetraethylammoniumtetrafluoroborat und 300 Teile Acetonitril wurden in ungeteilter Zelle gemäß Beispiel 1 elektrolysiert und aufgearbeitet, jedoch wurde nicht mit Wasser gewaschen und statt des Zentrifugierens wurde über einen Glasfiltertiegel der Größe G3 filtriert. Es wurden 4,8 Teile eines bronzemetallisch glänzenden Feststoffs erhalten. Die Elementaranalyse lieferte folgende Werte: 44,3 % C, 3,5 % H, 22,5 % S, 10,7 % F. Ein Pulverpreßling des gemahlenen Produkts besaß eine spezifische Leitfähigkeit von $3 \cdot 1^{-3}$ S/cm. Die reduzierte Viskosität betrug 0,093 dl/g. Bei der TG wurde bis 210 °C ein Gewichtsverlust von weniger als 10 % beobachtet. Die DSC zeigte ein exothermes Maximum bei 320 °C.

Beispiel 4

56,5 Teile 3-Methoxythiophen, 0,75 Teile 2-Methoxythiophen, 54,3 Teile Tetraethylammoniumtetrafluoroborat und 1500 Teile Acetonitril wurden in eine trogförmige, ungeteilte Elektrolysezelle gegeben. In der Mitte der Zelle war eine wassergekühlte Hohlkathode aus V2A-Stahl von 170 mm Länge und 170 mm Breite angeordnet. Zu beiden Seiten im Abstand von 2 cm parallel zur Kathode befand sich jeweils eine Anode aus Kohlenstoff-Filz (spez. Oberfläche (BET): ca. 0,5 $m^2/g$) von 170 mm Länge und 170 mm Breite (beidseitige geometrische Fläche von jeweils 600 $cm^2$). Zwischen der Kathode und den Anoden befand sich jeweils ein Polypropylen-Netz als Abstandshalter. Bei einer Elektrolysetemperatur von 25 °C und einem Anodenstrom von 4 A war eine Zellenspannung von 5 bis 11 Volt erforderlich. Nach einem Drittel der theoretisch benötigten Strommenge wurden die mit dem Polymeren beladenen Anoden gegen zwei neue ausgetauscht. Nach Verbrauch von zwei Dritteln der theoretisch benötigten Strommenge wurden die Anoden erneut ausgetauscht, und nach Verbrauch der theoretischen Strommenge wurde die Elektrolyse beendet. Die mit dem Rohprodukt beladenen Anoden wurden jeweils sofort nach dem Austausch in ein Bad mit Methylenchlorid gestellt und dort längere Zeit digeriert. Sie wurden nacheinander mit Methylenchlorid und Wasser gewaschen, bis die Waschlösungen praktisch farblos blieben. Nach dem Trocknen wurden die mit dem Polymeren beladenen Kohlenstoff-Filze in einem Bad mit Acetonitril solange digeriert, bis das Polymere praktisch vollständig in Lösung gegangen war. Die tief dunkelblaue Lösung wurde 0,5 h bei 10000 U/min zentrifugiert und die überstehende Lösung im Rotationsverdampfer zur Trockene eingeengt. Es wurden 21,1 Teile eines bronzemetallisch glänzenden Feststoffs erhalten. Die Elementaranalyse lieferte folgende Werte: 42,9 % C, 3,1 % H, 22,5 % S, 8,4 % F. Ein Pulverpreßling des gemahlenen Produkts besaß eine spezifische Leitfähigkeit von $8 \cdot 10^{-4}$ S/cm. Die reduzierte Viskosität betrug 0,09 dl/g. Bei der TG wurde bis 260 °C ein Gewichtsverlust von weniger als 10 % beobachtet. Die DSC zeigte ein exothermes Maximum bei 310 °C.

Beispiel 5

4,56 Teile 3-Methoxythiophen, 5,1 Teile 50 %ige Tetrafluoroborsäure, 4,34 Teile Tetraethylammoniumtetrafluoroborat und 300 Teile Acetonitril wurden in der ungeteilten Zelle gemäß Beispiel 1 elektrolysiert und aufgearbeitet. Es wurden 2,4 Teile eines bronzemetallisch glänzenden Feststoffs erhalten. Die Elementarananlyse lieferte folgende Werte: 41,8 % C, 3,1 % H, 22,3 % S, 13,0 % F. Ein Pulverpreßling des gemahlenen Produkts besaß eine spezifische Leitfähigkeit von $2 \cdot 10^{-4}$ S/cm. Die reduzierte Viskosität betrug 0,095 dl/g. Bei der TG wurde bis 260 °C ein Gewichtsverlust von weniger als 10 % beobachtet. Die DSC zeigte ein exothermes Maximum bei 305 °C.

Beispiel 6

11,3 Teile 3-Methoxythiophen, 0,11 Teile 2,4-Dimethoxythiophen, 4,34 Teile Tetraethylammoniumtetrafluoroborat und 300 Teile Acetonitril wurden in der ungeteilten Zelle gemäß Beispiel 1 elektrolysiert und aufgearbeitet, jedoch ohne mit Wasser zu waschen. Es wurden 4,1 Teile eines bronzemetallisch glänzenden Feststoffs erhalten. Die Elementaranlyse lieferte folgende Werte: 43,1 % C, 3,2 % H, 22,0 % S, 10,9 % F. Ein Pulverpreßling des gemahlenen Produkts besaß eine spezifische Leitfähigkeit von $2 \cdot 10^{-4}$ S/cm. Die reduzierte Viskosität betrug 0,096 dl/g. Bei der TG wurde bis 250 °C ein Gewichtsverlust von weniger als 10 % beobachtet. Die DSC zeigte ein exothermes Maximum bei 305 °C.

Beispiel 7

4,52 Teile 3-Methoxythiophen, 0,045 Teile 2-Methoxythiophen, 6,59 Teile Tetrabutylammoniumtetrafluoroborat und 250 Teile Acetonitril wurden in der ungeteilten Zelle gemäß Beispiel 1 elektrolysiert und aufgearbeitet, jedoch wurde nicht mit Wasser gewaschen. Es wurden 1,5 Teile eines gelbmetallisch glänzenden Feststoffs erhalten. Die Elementaranalyse lieferte folgende Werte: 41,0 % C, 3,4 % H, 18,5 % S, 15,0 % F. Ein Pulverpreßling des gemahlenen Produkts besaß eine spezifische Leitfähigkeit von $1 \cdot 10^{-4}$ S/cm. Die reduzierte Viskosität betrug 0,098 dl/g. Bei der TG wurde bis 250 °C ein Gewichstverlust von weniger als 10 % beobachtet. Die DSC zeigte ein exothermes Maximum bei 310 °C.

Beispiel 8

4,56 Teile 3-Methoxythiophen, 6,59 Teile Tetrabutylammoniumtetrafluoroborat und 250 Teile Benzonitril wurden in der ungeteilten Zelle gemäß Beispiel 1 elektrolysiert und aufgearbeitet, jedoch wurde nicht mit Wasser gewaschen. Es wurden 1,9 Teile eines bronzemetailisch glänzenden Feststoffs erhalten. Die Elementaranalyse lieferte folgende Werte: 44,5 % C, 3,2 % H, 21,6 % S, 10,5 % F. Ein Pulverpreßling des gemahlenen Produkts besaß eine spezifische Leitfähigkeit von $3 \cdot 10^{-4}$ S/cm. Die reduzierte Viskosität betrug 0,097 dl/g. Bei der TG wurde bis 270 °C ein Gewichtsverlust von weniger als 10 % beobachtet. Die DSC zeigte ein exothermes Maximum bei 312 °C.

Beispiel 9

56,5 Teile 3-Methoxythiophen, 0,75 Teile 2-Methoxythiophen, 54,3 Teile Tetraethylammoniumtetrafluoroborat und 1500 Teile Acetonitril wurden in der ungeteilten Zelle gemäß Beispiel 4 elektrolysiert und aufgearbeitet. Die Anoden bestanden jedoch aus Kohlenstoff-Filz (spez. Oberfläche (BET): 0,3 bis 0,4 $m^2/g$). Es wurden 15,4 Teile eines bronzemetallisch glänzenden Feststoffs erhalten. Die Elementaranalyse lieferte folgende Werte: 42,9 % C, 3,2 % H, 23,6 % S, 11,3 % F. Ein Pulverpreßling des gemahlenen Produkts besaß eine spezifische Leitfähigkeit von $4 \cdot 10^{-4}$ S/cm. Die reduzierte Viskosität betrug 0,096 dl/g. Bei der TG wurde bis 250 °C ein Gewichtsverlust von weniger als 10 % beobachtet. Die DSC zeigte ein exothermisches Maximum bei 320 °C.

Beispiel 10

4,56 Teile 3-Methoxythiophen, 9,12 Teile Tetraethylammoniumtetrafluoroborat und 400 Teile Acetonitril wurden in ungeteilter Zelle gemäß Beispiel 1 elektrolysiert und aufgearbeitet. Die Anode bestand jedoch aus einem 8-lagigen Netz von 90 mm Länge und 55 mm Breite aus Platin-Rhodium(95:5)-Draht von 0,07 mm Durchmesser. Beim Aufarbeiten wurde nicht mit Wasser gewaschen und statt des Zentrifugierens wurde über einen Glasfiltertiegel der Größe G3 filtriert. Es wurden 1,1 Teile eines bronzemetallisch glänzenden Feststoffs erhalten. Die Elementaranalyse lieferte folgende Werte: 39,4 % C, 3,0 % H, 20,1 % S, 14,9 % F. Ein Pulverpreßling des gemahlenen Produkts besaß eine spezifische Leitfähigkeit von $4 \cdot 10^{-4}$ S/cm. Die reduzierte Viskosität betrug 0,095 dl/g. Bei der TG wurde bis 270 °C ein Gewichtsverlust von weniger als 10 % beobachtet. Die DSC zeigte ein exothermes Maximum bei 320 °C.

Beispiel 11

1,2 Teile 3-Methoxythiophen, 11,6 Teile 3-Ethoxythiophen, 21,7 Teile Tetraethylammoniumtetrafluoroborat und 300 Teile Acetonitril wurden in ungeteilter Zelle gemäß Beispiel 1 elektrolysiert und aufgearbeitet, jedoch wurde nicht mit Wasser gewaschen. Es wurden 1,2 Teile eines blauschwarz glänzenden Feststoffs erhalten. Die Elementaranalyse lieferte folgende Werte: 35,8 % C, 3,1 % H, 16,6 % S, 16,8 % F. Ein Pulverpreßling des gemahlenen Produkts besaß eine spezifische Leitfähigkeit von $3 \cdot 10^{-4}$ S/cm. Die reduzierte Viskosität betrug 0,094 dl/g. Bei der TG wurde bis 250 °C ein Gewichtsverlust von weniger als 10 % beobachtet. Die DSC zeigte

ein exothermes Maximum bei 320 °C.

Vergleichsbeispiel A

2,28 Teile 3-Methoxythiophen, 3,29 Teile Tetrabutylammoniumtetrafluoroborat und 250 Teile Acetonitril wurden in eine ungeteilte Elektrolysezelle mit Magnetrührer und Kühlmantel gegeben. Kathode und Anode bestanden aus glatten Platinblechen mit einer spezischen Oberfläche deutlich unter 0,01 $m^2/g$ und von jeweils 80 mm Länge und 55 mm Breite, die parallel zueinander im Abstand von 2 cm angeordnet waren. Bei einer Temperatur von 25 °C und einer Anodenstromdichte von 2 $mA/cm^2$ erhielt man nach 2 h Elektrolysedauer einen dunklen Elektrodenbelag, der nach dem Waschen mit Methylenchlorid und Trocknen 0,7 Teile eines schwarzen Pulvers ergab. Die Elementaranalyse lieferte folgende Werte: 41,5 % C, 2,8 % H, 21,6 % S, 5,4 % F. Ein Pulverpreßling des gemahlenen Produkts besaß eine spezifische Leitfähigkeit von $4 \cdot 10^{-4}$ S/cm. Bei der TG wurde bis 200 °C ein Gewichtsverlust von weniger als 10 % beobachtet. Die DSC zeigte ein exothermes Maximum bei 295 °C. Eine Probe von 0,1 g des gereinigten Polymeren konnte in 100 ml Acetonitril nicht gelöst werden.

Beispiel 12

4,34 Teile Tetraethylammoniumtetrafluoroborat, 4,56 Teile 3-Methoxythiophen und 250 Teile Acetonitril wurden in eine ungeteilte Elektrolysezelle mit Kühlmantel gegeben. Die Kathode bestand aus V2A-Stahl-Blechen von 80 mm Länge, 55 mm Breite. Als Anode wurde ein Kohlenstoff-Filz (Flächengewicht ca. 0,3 $kg/m^2$, spez. Oberfläche (BET) ca. 1,5 $m^2/g$), von 80 mm Länge, 55 mm Breite und 3 mm Dicke eingesetzt (beidseitige geometrische Fläche ca. 90 $cm^2$). Die Anode wurde in einem Abstand von 2 cm parallel zur Kathode befestigt, getrennt über einen Abstandshalter aus Polypropylen-Netz. Bei einer Elektrolysetemperatur von 20 °C und einem Anodenstrom von 400 mA erhielt man eine Zellenspannung von 5 bis 11 Volt. Nach der Hälfte der theoretische benötigten Strommenge wurde die mit den Oligomeren beladene Anode gegen eine neue ausgetauscht und nach Verbrauch der theoretischen Strommenge wurde die Elektrolyse beendet. Die mit dem Rohprodukt beladenen Anoden wurden jeweils sofort nach dem Austausch getrocknet und in ein Bad mit Methylenchlorid gestellt und dort mehrfach längere Zeit digeriert. Nach dem erneuten Trocknen wurden die mit den Oligomeren beladenen Kohlenstoff-Filze in einem Bad mit Acetonitril solange digeriert, bis die Oligomeren praktisch vollständig in Lösung gegangen waren. Die tief dunkelblaue Lösung wurde im Rotationsverdampfer zur Trockene eingeengt. Das Rohprodukt wurde mechanisch zerkleinert, mit Wasser gewaschen, getrocknet, 12 h mit Methylenchlorid digeriert, anschließend abfiltriert und getrocknet. Zur weiteren Reinigung wurde das erhaltene Material erneut in Acetonitril gelöst und 0,5 h bei 10000 U/min zentrifugiert und das Zentrifugat im Rotationsverdampfer zur Trockene eingeengt. Es wurden 1,92 Teile eines bronzemetallisch glänzenden Feststoffs erhalten. Die Elementaranalyse lieferte folgende Werte: 44,5 % C, 3,2 % H, 22,1 % S, 9,4 % F. Ein Pulverpreßling des gemahlenen Produktes besaß eine spezifische Leitfähigkeit von $1{,}8 \cdot 10^{-3}$ S/cm. Bei der DTG wurde bis 245 °C ein Gewichtsverlust von weniger als 10 % beobachtet. Die DSC zeigte ein Maximum bei 325 °C. Im Massenspektrum der undotierten Form wurden die Molekülionen des Pentameren (m/e = 562) und Hexameren (m/e = 674) nachgewiesen. Die GPC der undotierten Form ergab, daß mehr als 80 % des Produktes aus Pentameren und Hexameren bestanden. Im UV/VIS/NIR-Spektrum in Tetrahydrofuran zeigte das undotierte Pentamere ein Maximum bei $\lambda$ = 460 nm, das undotierte Hexamere ein Maximum bei $\lambda$ = 486 nm.

Beispiel 13

4,56 Teile 3-Methoxythiophen, 6,59 Teile Tetrabutylammoniumtetrafluoroborat und 300 Teile Acetonitril wurden in der Elektrolysezelle gemäß Beispiel 12, jedoch unter Verwendung einer Ag/AgCl-Referenzelektrode bei einem konstanten Anodenpotential von 1,48 V (vs. Ag/AgCl) elektrolysiert und gemäß Beispiel 12 aufgearbeitet. Es wurden 2,2 Teile eines bronzemetallisch glänzenden Feststoffs erhalten. Die Elementaranalyse lieferte folgende Werte: 45,1 % C, 3,2 % H, 23,1 % S, 9,6 % F. Ein Pulverpreßling des gemahlenen Produktes besaß eine spezifische Leitfähigkeit von $7{,}1 \cdot 10^{-3}$ S/cm. Bei der DTG wurde bis 260 °C ein Gewichtsverlust von weniger als 10 % beobachtet. Die DSC zeigte ein Maximum bei 305 °C. Im Massenspektrum der undotierten Form wurden die Molekülionen des Pentameren (m/e = 562) und Hexameren (m/e = 674) nachgewiesen. Die GPC der undotierten Form ergab, daß mehr als 80 % des Produktes aus Pentameren und Hexameren bestanden. Im UV/VIS/NIR-Spektrum in Tetrahydrofuran zeigte das undotierte Pentamere ein Maximum bei $\lambda$ = 460 nm, das undotierte Hexamere ein Maximum bei $\lambda$ = 486 nm.

Beispiel 14

56,5 Teile 3-Methoxythiophen, 54,3 Teile Tetraethylammoniumtetrafluoroborat und 1500 Teile Acetonitril wurden in eine trogförmige, ungeteilte Elektrolysezelle gegeben. In der Mitte der Zelle war eine wassergekühlte Hohlkathode aus V2A-Stahl von 170 mm Länge und 170 mm Breite angeordnet. Zu beiden Seiten im Abstand von 2 cm parallel zur Kathode befand sich jeweils eine Anode aus Kohlenstoff-Filz (Flächengewicht 0,4 kg/$m^2$, spez. Oberfläche (BET) ca. 1,5 $m^2$/g) von 170 mm Länge, 170 mm Breite. und 4 mm Dicke. Zwischen der Kathode und den Anoden befand sich jeweils ein Polypropylen-Netz als Abstandshalter. Bei einer Elektrolysetemperatur von 25 °C und einem Anodenstrom von 4 A erhielt man eine Zellenspannung von 5 bis 11 Volt. Nach Verbrauch der theoretisch erforderlichen Strommenge wurde die Elektrolyse beendet. Die mit dem Rohprodukt beladenen Anoden wurden jeweils sofort getrocknet und in ein Bad mit Methylenchlorid gestellt und dort mehrfach längere Zeit digeriert. Nach dem erneuten Trocknen wurden die mit den Oligomeren beladenen Kohlestoff-Filze in einem Bad mit Acetonitril solange digeriert, bis die Oligomeren praktisch vollständig in Lösung gegangen waren. Die tief dunkelblaue Lösung wurde über einen Glasfiltertiegel der Größe G3 filtriert und das Filtrat im Rotationsverdampfer zur Trockene eingeengt. Das Rohprodukt wurde mechanisch zerkleinert, mit Wasser gewaschen, getrocknet, 12 h mit Methylenchlorid digeriert, anschließend abfiltriert und getrocknet. Es wurden 24,2 Teile eines bronzemetallisch glänzenden Feststoffs erhalten. Die Elementaranalyse lieferte folgende Werte: 44,4 % C, 3,2 % H, 23,2 % S, 7,5 % F. Ein Pulverpreßling des gemahlenen Produktes besaß eine spezifische Leitfähigkeit von $2{,}1 \cdot 10^{-3}$ S/cm. Bei der DTG wurde bis 260 °C ein Gewichtsverlust von weniger als 10 % beobachtet. Die DSC zeigte ein Maximum bei 310 °C. Im Massenspektrum der undotierten Form wurden die Molekülionen des Pentameren (m/e = 562) und Hexameren (m/e = 674) nachgewiesen. Die GPC der undotierten Form ergab, daß mehr als 90 % des Produktes aus Pentameren und Hexameren bestanden. Im UV/VIS/NIR-Spektrum in Tetrahydrofuran zeigte das undotierte Pentamere ein Maximum bei $\lambda$ = 460 nm, das undotierte Hexamere ein Maximum bei $\lambda$ = 486 nm.

Beispiel 15

4,33 Teile 3-Methoxythiophen, 0,23 Teile 2-Methoxythiophen, 4,34 Teile Tetraethylammoniumtetrafluoroborat und 250 Teile Acetonitril wurden in der ungeteilten Zelle gemäß Beispiel 12 elektrolysiert und aufgearbeitet. Es wurden 1,4 Teile eines bronzemetallisch glänzenden Feststoffs erhalten. Die Elementaranalyse lieferte folgende Werte: 44,4 % C, 2,9 % H, 23,0 % S, 8,5 % F. Ein Pulverpreßling des gemahlenen Produkts besaß eine spezifische Leitfähigkeit von $2{,}1 \cdot 10^{-3}$ S/cm. Bei der DTG wurde bis 200 °C ein Gewichtsverlust von weniger als 10% beobachtet. Die DSC zeigte ein Maximum bei 340 °C. Im Massenspektrum der undotierten Form wurden die Molekülionen des Pentameren (m/e = 562) und Hexameren (m/e = 674) nachgewiesen. Die GPC der undotierten Form ergab, daß mehr als 90 % des Produktes aus Pentameren und Hexameren bestanden.

Beispiel 16

4,33 Teile 3-Methoxythiophen, 0,26 Teile 3-Ethoxythiophen, 4,34 Teile Tetraethylammoniumtetrafluoroborat und 250 Teile Acetonitril wurden in einer Elektrolysezelle gemäß Beispiel 12 elektrolysiert und aufgearbeitet. Es wurden 1,2 Teile eines bronzemetallisch glänzenden Feststoffs erhalten. Die Elementaranalyse lieferte folgende Werte: 42,5 % C, 2,9 % H, 22,9 % S, 9,0 % F. Ein Pulverpreßling des gemahlenen Produktes besaß eine spezifische Leitfähigkeit von $2{,}0 \cdot 10^{-3}$ S/cm. Bei der DTG wurde bis 210 °C ein Gewichtsverlust von weniger als 10 % beobachtet. Die DSC zeigte ein Maximum bei 320 °C. Im Massenspektrum der undotierten Form wurde das Molekülion des Pentameren (m/e = 576) aus vier Methoxythiopheneinheiten und einer Ethoxythiopheneinheit nachgewiesen.

Beispiel 17

4,33 Teile 3-Methoxythiophen, 0,31 Teile 3-Butoxythiophen, 4,34 Teile Tetraethylammoniumtetrafluoroborat und 250 Teile Acetonitril wurden in einer Elektrolysezelle gemäß Beispiel 12 elektrolysiert und aufgearbeitet. Es wurden 1,5 Teile eines bronzmmetallisch glänzenden Feststoffs erhalten. Die Elementaranalyse lieferte folgende Werte: 45,6 % C, 3,3 % H, 22,0 % S, 8,9 % F. Ein Pulverpreßling des gemahlenen Produktes besaß eine spezifische Leitfähigkeit von $4 \cdot 10^{-3}$ S/cm. Bei der DTG wurde bis 250 °C ein Gewichtsverlust von weniger als 10 % beobachtet. Die DSC zeigte ein Maximum bei 305 °C. Im Massenspektrum der undotierten Form wurde das Molekülion des Pentameren (m/e = 604) aus vier Methoxythiopheneinheiten und einer Butoxythiopheneinheit nachgewiesen.

Beispiel 18

4,33 Teile 3-Methoxythiophen, 0,31 Teile 2-Methylthiophen, 4,34 Teile Tetraethylammoniumtetrafluoroborat und 250 Teile Acetonitril wurden in einer Elektrolysezelle gemäß Beispiel 12 elektrolysiert und aufgearbeitet. Es wurden 1,4 Teile eines bronzemetallisch glänzenden Feststoffs erhalten. Die Elementaranalyse lieferte folgende Werte:46,1 % C, 3,3 % H, 22,2 % S, 8,5 % F. Ein Pulverpreßling des gemahlenen Produktes besaß eine spezifische Leitfähigkeit von $2 \cdot 10^{-3}$ S/cm. Bei der DTG wurde bis 250 °C ein Gewichtsverlust von weniger als 10 % beobachtet. Die DSC zeigte ein Maximum bei 310 °C. Im Massenspektrum der undotierten Form wurde das Molekülion des Pentameren (m/e = 546) aus vier Methoxythiopheneinheiten und einer Methylthiopheneinheit nachgewiesen.

Beispiel 19

4,47 Teile 3-Methoxythiophen, 0,054 Teile Pyrrol, 4,34 Teile Tetraethylammoniumtetrafluoroborat und 250 Teile Acetonitril wurden in einer Elektrolysezelle gemäß Beispiel 12 elektrolysiert und aufgearbeitet. Es wurden 1,4 Teile eines bronzemetallisch glänzenden Feststoffs erhalten. Die Elementaranalyse lieferte folgende Werte: 46,5 % C, 3,3 % H, 3,7 % N, 21,1 % S, 6,6 % F. Ein Pulverpreßling des gemahlenen Produktes besaß eine spezifische Leitfähigkeit von $2 \cdot 10^{-3}$ S/cm. Bei der DTG wurde bis 240 °C ein Gewichtsverlust von weniger als 10 % beobachtet. Die DSC zeigte ein Maximum bei 300 °C.

Beispiel 20

4,56 Teile 3-Methoxythiophen, 6,59 Teile Tetrabutylammoniumtetrafluoroborat und 250 Teile Benzonitril wurden in einer Elektrolysezelle gemäß Beispiel 12 elektrolysiert und aufgearbeitet. Es wurden 1,9 Teile eines bronzemetallisch glänzenden Feststoffs erhalten. Die Elementaranalyse lieferte folgende Werte: 42,9 % C, 3,1 % H, 22,5 % S, 8,4 % F. Ein Pulverpreßling des gemahlenen Produktes besaß eine spezifische Leitfähigkeit von $1{,}2 \cdot 10^{-3}$ S/cm. Bei der DTG wurde bis 270 °C ein Gewichtsverlust von weniger als 10 % beobachtet. Die DSC zeigte ein Maximum bei 312 °C. Im Massenspektrum der undotierten Form wurden die Molekülionen des Pentameren (m/e = 562) und Hexameren (m/e = 674) nachgewiesen.

Beispiel 21

5,13 Teile 3-Ethoxythiophen, 4,34 Teile Tetraethylammoniumtetrafluoroborat und 250 Teile Acetonitril wurden gemäß Beispiel 13 elektrolysiert und aufgearbeitet. Es wurden 1,2 Teile eines bronzemetallisch glänzenden Feststoffs erhalten. Die Elementaranalyse lieferte folgende Werte: 48,1 % C, 4,2 % H, 19,9 % S, 8,5 % F. Ein Pulverpreßling des gemahlenen Produktes besaß eine spezifische Leitfähigkeit von $1{,}0 \cdot 10^{-2}$ S/cm. Bei der DTG wurde bis 205 °C ein Gewichtsverlust von weniger als 10 % beobachtet. Die DSC zeigte ein Maximum bei 305 °C. Im Massenspektrum der undotierten Form wurde das Molekülion des Pentameren (m/e = 632) nachgewiesen.

Beispiel 22

4,33 Teile 3-Methoxythiophen, 0,29 Teile 2,4-Dimethoxythiophen, 4,34 Teile Tetraethylammoniumtetrafluoroborat und 250 Teile Acetonitril wurden in der ungeteilten Zelle gemäß Beispiel 12 elektrolysiert und aufgearbeitet. Es wurden 1,15 Teile eines bronzemetallisch glänzenden Feststoffs erhalten. Die Elementaranalyse lieferte folgende Werte: 44,1 % C, 2,7 % H, 22,7 % S, 8,4 % F. Ein Pulverpreßling des gemahlenen Produkts besaß eine spezifische Leitfähigkeit von $3 \times 10^{-4}$ S/cm. Bei der DTG wurde bis 200 °C ein Gewichtsverlust von weniger als 10 % beobachtet.

Im Massenspektrum der undotierten Form wurden die Molekülionen des Pentameren (m/e = 592)

Die GPC der undotierten Form ergab, daß mehr als 80 % des Produktes aus Pentameren und Hexameren bestanden.

Beispiel 23

4,33 Teile 3-Methoxythiophen, 0,29 Teile 3,4-Dimethoxythiophen, 4,34 Teile Tetraethylammoniumtetrafluoroborat und 250 Teile Acetonitril wurden in der ungeteilten Zelle gemäß Beispiel 12 elektrolysiert und aufgearbeitet. Es wurden 1,06Teile eines bronzemetallisch glänzenden Feststoffs erhalten. Die Elementaranalyse lieferte folgende Werte: 44,0 % C, 2,7 % H,22,7 % S, 8,5 % F. Ein Pulverpreßling des gemahlenen Produkts

besaß eine spezifische Leitfähigkeit von $2{,}1 \cdot 10^{-3}$ S/cm. Bei der DTG wurde bis 200 °C ein Gewichtsverlust von weniger als 10 % beobachtet.

Im Massenspektrum der undotierten Form wurden die Molekülionen des Pentameren (m/e = 592) nachgewiesen. Die GPC der undotierten Form ergab, daß mehr als 80 % des Produktes aus Pentameren und Hexameren bestanden.

Beispiel 24

4,33 Teile 3-Methoxythiophen, 5,58 Teile Trifluormethansulfonat und 250 Teile Acetonitril wurden in der ungeteilten Zelle gemäß Beispiel 12 elektrolysiert und aufgearbeitet. Es wurden 0,88Teile eines bronzemetallisch glänzenden Feststoffs erhalten. Die Elementaranalyse lieferte folgende Werte:43,4 % C, 3,0 % H, 24,9 % S, 7,0 % F. Ein Pulverpreßling des gemahlenen Produkts besaß eine spezifische Leitfähigkeit von 1,4 x $10^{-3}$S/cm. Bei der DTG wurde bis 200 °C ein Gewichtsverlust von weniger als 10 % beobachtet. Im Massenspektrum der undotierten Form wurden die Molekülionen des Pentameren (m/e = 562) und Hexameren (m/e = 674) nachgewiesen. Die GPC der undotierten Form ergab, daß mehr als 80 % des Produktes aus Pentameren und Hexameren bestanden.

## Patentansprüche

### Patentansprüche für folgende Vertragsstaaten : BE, CH, LI, DE, FR, GB, IT, LU, NL, SE

1. Intrinsisch elektrisch leitendes Polymeres mit Struktureinheiten, die durch Verknüpfung in 2-Stellung und/oder 5-Stellung miteinander verbunden sind, im statistischen Mittel bestehend aus 60 bis 100 Gew.-% Struktureinheiten, die sich von mindestens einem Monomeren der Formel (I) ableiten

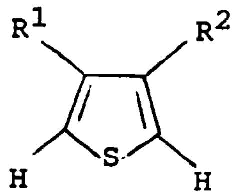

(I),

worin
$R^1$ eine $C_1$-$C_{12}$-Alkoxygruppe oder $-O(CH_2CH_2O)_nCH_3$ mit n = 1 bis 4 und
$R^2$ ein Wasserstoffatom, eine $C_1$-$C_{12}$-Alkylgruppe, eine $C_1$- $C_{12}$-Alkoxygruppe oder$-O(CH_2CH_2O)_nCH_3$ mit n = 1 bis 4 bedeuten, oder $R^1$ zusammen mit $R^2$ $-O(CH_2)_m-CH_2$ oder $-O(CH_2)_m-O-$, worin m = 1 bis 12 ist, darstellt,
0 bis 40 Gew.-% Struktureinheiten, die sich von mindestens einem Monomeren der Formel (II) ableiten

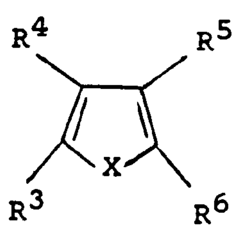

(II),

worin $R^4$ und $R^5$ unabhängig voneinander ein Wasserstoffatom, ein Halogenatom, eine $C_1$-$C_{12}$-Alkylgruppe oder Aryl bedeuten oder zusammen mit den sie verbindenden C-Atomen einen aromatischen Ring bilden, $R^3$ und $R^6$ unabhängig voneinander ein Wasserstoffatom bedeuten oder $R^3$ zusammen mit $R^4$ und den sie verbindenden C-Atomen oder $R^5$ zusammen mit $R^6$ und den sie verbindenden C-Atomen jeweils einen aromatischen Ring bilden,
X ein Sauerstoffatom, ein Schwefelatom, eine =NH-Gruppe, eine =N-Alkylgruppe oder eine =N-Arylgruppe bedeutet, 0 bis 40 Gew.-% Struktureinheiten, die sich von mindestens einem Monomeren der Formel (III) ableiten

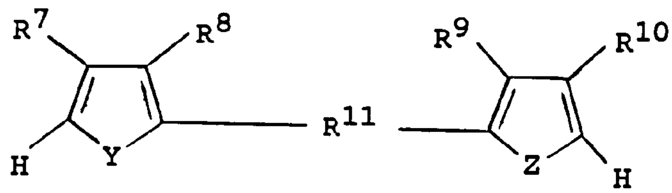

(III),

worin $R^7$, $R^8$, $R^9$ und $R^{10}$ unabhängig voneinander ein Wasserstoffatom, eine $C_1$-$C_{12}$-Alkylgruppe, eine $C_1$-$C_{12}$-Alkoxygruppe oder eine Arylgruppe bedeuten,
Y und Z unabhängig voneinander ein Sauerstoffatom, ein Schwefelatom, eine =NH-Gruppe, eine =N-Alkylgruppe oder =N-Arylgruppe bedeuten,
$R^{11}$ eine Arylengruppe, eine Heteroarylengruppe oder ein konjugiertes System der Formel $(CH=CH)_o$ , worin o null, 1, 2 oder 3 ist, bedeutet,
0 bis 40 Gew-% Struktureinheiten, die sich von mindestens einem Monomeren der Formel (IV) ableiten

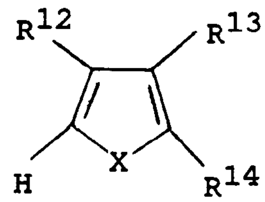

(IV),

worin $R^{12}$ und $R^{13}$ unabhängig voneinander ein Wasserstoffatom, ein Halogenatom, eine $C_1$-$C_{12}$-Alkylgruppe, eine $C_1$-$C_{12}$-Alkoxygruppe, eine $C_1$-$C_4$-Alkylaminogruppe oder eine $C_1$-$C_4$-Acylaminogruppe,
$R^{14}$ ein Halogenatom, eine $C_1$-$C_{12}$-Alkylgruppe, eine $C_1$-$C_{12}$-Alkoxygruppe eine $C_1$-$C_4$-Alkylaminogruppe oder eine $C_1$-$C_4$-Acylaminogruppe bedeuten und X die oben angegebene Bedeutung hat,
wobei das Polymere in der oxidierten Form in Acetonitril bei 25 °C vollständig löslich ist und Lösungen mit einem Gehalt von mindestens 0,1 g des Polymeren in 100 ml Acetonitril bei 25 °C erhalten werden.

2. Elektrisch leitendes Polymeres gemäß Anspruch 1, dadurch gekennzeichnet, daß es aus drei bis zehn Struktureinheiten besteht.

3. Intrinsisch elektrisch leitendes Polymeres nach Anspruch 1, dadurch gekennzeichnet, daß wenigstens eine der beiden Endgruppen aus einer Struktureinheit besteht, die sich von Verbindungen der Formel (IV) ableitet

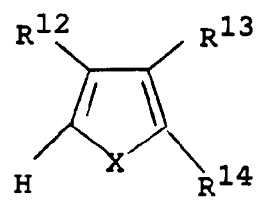

(IV),

worin $R^{12}$ und $R^{13}$ unabhängig voneinander ein Wasserstoffatom, ein Halogenatom, eine $C_1$-$C_{12}$-Alkylgruppe, oder eine $C_1$-$C_{12}$-Alkoxygruppe sind und $R^{14}$ ein Halogenatom, eine $C_1$-$C_{12}$-Alkylgruppe oder eine $C_1$-$C_{12}$-Alkoxygruppe ist und X die in Anspruch 1 genannte Bedeutung hat.

4. Intrinsisch elektrisch leitendes Polymeres nach Anspruch 1, dadurch gekennzeichnet, daß in Formel (I) $R^1$ gleich $OCH_3$ oder $OC_2H_5$ und $R_2$ gleich H ist.

5. Intrinsisch elektrisch leitendes Polymeres nach Anspruch 1, dadurch gekennzeichnet, daß Lösungen mit einer Konzentration von mindestens 1,0 g Polymeres in 100 ml Acetonitril bei 25 °C möglich sind.

6. Intrinsisch elektrisch leitendes Polymeres nach Anspruch 1, dadurch gekennzeichnet, daß seine elektrische Leitfähigkeit $10^{-4}$ bis 100 S/cm beträgt.

7. Verfahren zur Herstellung des intrinsisch elektrisch leitenden Polymeren nach Anspruch 1 durch elektrochemische Polymerisation von mindestens einem Monomeren der Formel (I), gegebenenfalls zusammen mit Comonomeren, in einem dipolar aprotischen Elektrolyt-Lösemittel, in Gegenwart eines Leitsalzes, dadurch gekennzeichnet, daß die Anode eine spezifische Oberfläche von mindestens 0,01 $m^2/g$ aufweist und das Elektrolytsystem relativ zur Anode nicht oder nur schwach bewegt wird mit einer Strömungsgeschwindigkeit kleiner als 1 cm/s.

8. Verfahren nach Anspruch 7, dadurch gekennzeichnet, daß die Anode aus Kohlenstoff mit einer Netz-, Schwamm-, Gewebe- oder Filzstruktur besteht, die Reaktionstemperatur im Bereich von -60 bis 80°C liegt und die Monomerkonzentration 0,01 bis 5 mol/l Elektrolyt-Lösemittel beträgt.

9. Intrinsisch elektrisch leitendes Polymeres nach Anspruch 1, dadurch gekennzeichnet, daß zur Kompensation der positiven Ladung im Polymeren in der oxidierten Form eine Zahl von Anionen, bezogen auf die Zahl der Monomereinheiten von 15% bis 30% enthalten ist.

10. Intrinsisch elektrisch leitendes Polymeres nach Anspruch 1, dadurch gekennzeichnet, daß im Polymeren in der oxidierten Form Tetrafluoroborat-, Hexafluorophosphat- oder Trifluormethansulfonat-Anionen enthalten sind.

**Patentansprüche für folgende Vertragsstaaten : AT, ES, GR**

1. Verfahren zur Herstellung eines intrinsisch elektrisch leitenden Polymeren mit Struktureinheiten, die durch Verknüpfung in 2-Stellung und/oder 5-Stellung miteinander verbunden sind, im statistischen Mittel bestehend aus 60 bis 100 Gew.-% Struktureinheiten, die sich von mindestens einem Monomeren der Formel (I) ableiten

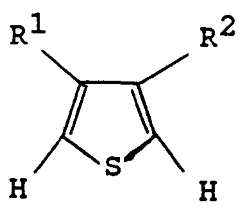

(I),

worin
$R^1$ eine $C_1$-$C_{12}$-Alkoxygruppe oder $-O(CH_2CH_2O)_nCH_3$ mit n = 1 bis 4 und
$R^2$ ein Wasserstoffatom, eine $C_1$-$C_{12}$-Alkylgruppe, eine $C_1$-$C_{12}$-Alkoxygruppe oder $-O(CH_2CH_2O)_nCH_3$ mit n = 1 bis 4 bedeuten, oder $R^1$ zusammen mit $R^2$ $-O(CH_2)_m-CH_2$ oder $-O(CH_2)_m-O-$, worin m = 1 bis 12 ist, darstellt,
0 bis 40 Gew.-% Struktureinheiten, die sich von mindestens einem Monomeren der Formel (II) ableiten

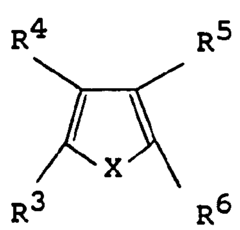

(II),

worin $R^4$ und $R^5$ unabhängig voneinander ein Wasserstoffatom, ein Halogenatom, eine $C_1$-$C_{12}$-Alkylgruppe oder Aryl bedeuten oder zusammen mit den sie verbindenden C-Atomen einen aromatischen Ring bilden, $R^3$ und $R^6$ unabhängig voneinander ein Wasserstoffatom bedeuten oder $R^3$ zusammen mit $R^4$ und den sie verbindenden C-Atomen oder $R^5$ zusammen mit $R^6$ und den sie verbindenden C-Atomen jeweils einen aromatischen Ring bilden, X ein Sauerstoffatom, ein Schwefelatom, eine =NH-Gruppe, eine =N-Alkylgruppe oder eine =N-Arylgruppe bedeutet, 0 bis 40 Gew.-% Struktureinheiten, die sich von mindestens einem Monomeren der Formel (III) ableiten

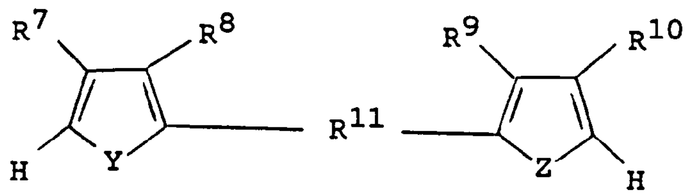

(III),

worin $R^7$, $R^8$, $R^9$ und $R^{10}$ unabhängig voneinander ein Wasserstoffatom, eine $C_1$-$C_{12}$-Alkylgruppe, eine $C_1$-$C_{12}$-Alkoxygruppe oder eine Arylgruppe bedeuten,
Y und Z unabhängig voneinander ein Sauerstoffatom, ein Schwefelatom, eine =NH-Gruppe, eine =N-Alkylgruppe oder =N-Arylgruppe bedeuten,
$R^{11}$ eine Arylengruppe, eine Heteroarylengruppe oder ein konjugiertes System der Formel $(CH{=}CH)_o$ , worin o null, 1, 2 oder 3 ist, bedeutet,
0 bis 40 Gew-% Struktureinheiten, die sich von mindestens einem Monomeren der Formel (IV) ableiten

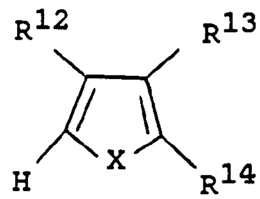

(IV),

worin $R^{12}$ und $R^{13}$ unabhängig voneinander ein Wasserstoffatom, ein Halogenatom, eine $C_1$-$C_{12}$-Alkylgruppe, eine $C_1$-$C_{12}$-Alkoxygruppe, eine $C_1$-$C_4$-Alkylaminogruppe oder eine $C_1$-$C_4$-Acylaminogruppe,
$R^{14}$ ein Halogenatom, eine $C_1$-$C_{12}$-Alkylgruppe, eine $C_1$-$C_{12}$-Alkoxygruppe eine $C_1$-$C_4$-Alkylaminogruppe oder eine $C_1$-$C_4$-Acylaminogruppe bedeuten und X die oben angegebene Bedeutung hat,
wobei das Polymere in der oxidierten Form in Acetonitril bei 25 °C vollständig löslich ist und Lösunqen mit einem Gehalt von mindestens 0.1 g des Polymeren in 100 ml Acetonitril bei 25 °C erhalten werden, durch elektrochemische Polymerisation von mindestens einem Monomeren der Formel (I), gegebenenfalls zusammen mit Comonomeren, in einem dipolar aprotischen Elektrolyt-Lösemittel in Gegenwart eines Leitsalzes, dadurch gekennzeichnet, daß die Anode eine spezifische Oberfläche von mindestens 0,01 $m^2/g$ aufweist und das Elektrolytsystem relativ zur Anode nicht oder nur schwach bewegt wird mit einer Strömungsgeschwindigkeit kleiner als 1 cm/s.

**2.** Verfahren nach Anspruch 1, dadurch gekennzeichnet, daß die Anode aus Kohlenstoff mit einer Netz-, Schwamm-, Gewebe- oder Filzstruktur besteht, die Reaktionstemperatur im Bereich von -60 bis 80°C liegt und die Monomerkonzentration 0,01 bis 5 mol/l Elektrolyt-Lösemittel beträgt.

**3.** Verfahren nach Anspruch 1, dadurch gekennzeichnet, daß die Reaktionstemperatur im Bereich von -20 bis 40 °C liegt.

**4.** Verfahren nach Anspruch 1, dadurch gekennzeichnet, daß die Monomerenkonzentration 0,05 bis 1 mol/l Elektrolyt-Lösemittel beträgt.

**5.** Verfahren nach Anspruch 1, dadurch gekennzeichnet, daß als Leitsalz Tetraalkylammoniumtetrafluoroborat in einer Menge von 0,01 bis 1 mol/l Elektrolyt eingesetzt wird.

**6.** Verwendung des nach Anspruch 1 hergestellten intrinsisch elektrisch leitenden Polymeren zum Einmischen in Kunststoff sowie zur Beschichtung von elektrisch leitenden und nicht leitenden Materialien zwecks Herstellung von Katalysatoren, elektrischen Schaltern, Halbleiter-Bauteilen, Solarzellen, Abschirmmaterialien, Tarnanstrichen, Flächenheizleitern, Spezialelektroden sowie antistatischen Folien und Fasern.

## Claims

### Claims for the following Contracting States : BE, CH, LI, DE, FR, GB, IT, LU, NL, SE

1. An intrinsically electrically conductive polymer with structural units which are mutually linke the 2-position and/or 5-position and are composed, as a statistical mean,
of 60 to 100% by weight of structural units which are derived from at least one monomer of the formula (I)

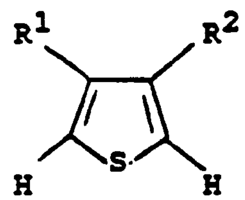

(I)

in which
$R^1$ is a $C_1$-$C_{12}$-alkoxy group or $-O(CH_2CH_2O)_nCH_3$ with n = 1 to 4 and
$R^2$ is a hydrogen atom, a $C_1$-$C_{12}$-alkyl group, a $C_1$-$C_{12}$-alkoxy group or $-O(CH_2CH_2O)_nCH_3$ with n = 1 to 4, or $R^1$ together with $R^2$ are $-O(CH_2)_m-CH_2$ or $-O(CH_2)_m-O-$ with m = 1 to 12,
of 0 to 40% by weight of structural units which are derived from at least one monomer of the formula (II)

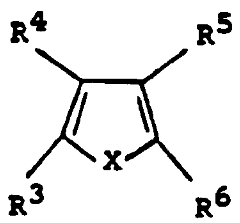

(II)

in which
$R^4$ and $R^5$ independently of one another are a hydrogen atom, a halogen atom, a $C_1$-$C_{12}$-alkyl group or aryl or, together with the carbon atoms linking them, form an aromatic ring,
$R^3$ and $R^6$ independently of one another are a hydrogen atom or $R^3$ together with $R^4$ and the carbon atoms linking them or $R^5$ together with $R^6$ and the carbon atoms linking them in each case form an aromatic ring,
X is an oxygen atom, a sulfur atom, an =NH group, an =N-alkyl group or an =N-aryl group,
of 0 to 40% by weight of structural units which are derived from at least one monomer of the formula (III)

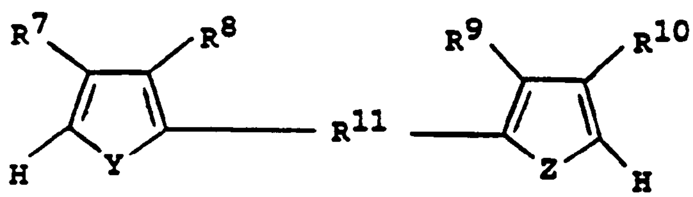

(III)

in which
$R^7$, $R^8$, $R^9$ and $R^{10}$ independently of one another are a hydrogen atom, a $C_1$-$C_{12}$-alkyl group, a $C_1$-$C_{12}$-alkoxy group or an aryl group,
Y and Z independently of one another are an oxygen atom, a sulfur atom, an =NH group, an =N-alkyl group or an =N-aryl group and
$R^{11}$ is an arylene group, a heteroarylene group or a conjugated system of the formula $(CH=CH)_o$, where o is zero, 1, 2 or 3,
of 0 to 40% by weight of structural units which are derived from at least one monomer of the formula (IV)

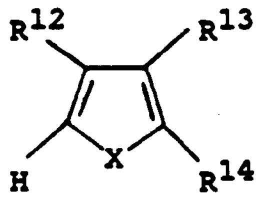

(IV)

in which
$R^{12}$ and $R^{13}$ independently of one another are a hydrogen atom, a halogen atom, a $C_1$-$C_{12}$-alkyl group, a $C_1$-$C_{12}$-alkoxy group, a $C_1$-$C_4$-alkylamino group or a $C_1$-$C_4$-acylamino group,
$R^{14}$ is a halogen atom, a $C_2$-$C_{12}$-alkyl group, a $C_1$-$C_{12}$-alkoxy group, a $C_2$-$C_4$-alkylamino group or a $C_1$-$C_4$-acylamino group and
X is as defined above,
the polymer in the oxidized form being completely soluble in acetonitrile at 25°C and solutions with a content of at least 0.1 g of polymer in 100 ml of acetonitrile being obtained at 25°C.

2. An electrically conductive polymer as claimed in claim 1, which comprises three to ten structural units.

3. An intrinsically electrically conductive polymer as claimed in claim 1, wherein at least one of the two end groups consists of a structural unit which is derived from a compound of the formula (IV)

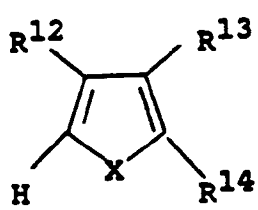

(IV)

in which
$R^{12}$ and $R^{13}$ independently of one another are a hydrogen atom, a halogen atom, a $C_1$-$C_{12}$-alkyl group or a $C_1$-$C_{12}$-alkoxy group and
$R^{14}$ is a halogen atom, a $C_1$-$C_{12}$-alkyl group or a $C_1$-$C_{12}$-alkoxy group and
X is as defined in claim 1.

4. An intrinsically electrically conductive polymer as claimed in claim 1, wherein, in formula (I), $R^1$ is $OCH_3$ or $OC_2H_5$ and $R^2$ is H.

5. An intrinsically electrically conductive polymer as claimed in claim 1, wherein solutions with a concentration of at least 1.0 g of polymer in 100 ml of acetonitrile at 25°C are possible.

6. An intrinsically electrically conductive polymer as claimed in claim 1, which has an electrical conductivity of $10^{-4}$ to 100 S/cm.

7. A process for preparing the intrinsically electrically conductive polymer as claimed in claim 1 by electrochemical polymerization of at least one monomer of the formula (I), if desired together with comonomers, in a dipolar aprotic electrolyte solvent, in the presence of a conductive salt, wherein the anode has a specific surface area of at least 0.01 $m^2/g$, and the electrolyte system is moved only slightly or not at all relative to the anode, at a flow rate of less than 1 cm/s.

8. The process as claimed in claim 7, wherein the anode consists of carbon with a network, sponge, fabric or felt structure, the reaction temperature is in the range from -60 to 80°C and the monomer concentration is 0.01 to 5 mol/l of electrolyte solvent.

9. An intrinsically electrically conductive polymer as claimed in claim 1, which contains a number of anions of 15% to 30% based on the number of monomer units, in order to compensate the positive charge, in the polymer in the oxidized form.

10. An intrinsically electrically conductive polymer as claimed in claim 1, which contains tetrafluoroborate, hexafluorophosphate or trifluoromethane-sulfonate anions in the polymer in the oxidized form.

**Claims for the following Contracting States : AT, ES, GR**

1. A process for the preparation of an intrinsically electrically conductive polymer with structural units which are mutually linked in the 2-position and/or 5-position and are composed, as a statistical mean, of 60 to 100% by weight of structural units which are derived from at least one monomer of the formula (I)

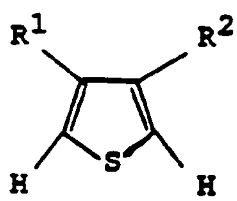

(I)

in which
$R^1$ is a $C_1$-$C_{12}$-alkoxy group or $-O(CH_2CH_2O)_nCH_3$ with n = 1 to 4 and
$R^2$ is a hydrogen atom, a $C_1$-$C_{12}$-alkyl group, a $C_1$-$C_{12}$-alkoxy group or $-O(CH_2CH_2O)_nCH_3$ with n = 1 to 4, or $R^1$ together with $R^2$ are $-O(CH_2)_m-CH_2$ or $-O(CH_2)_m-O-$ with m = 1 to 12,
of 0 to 40% by weight of structural units which are derived from at least one monomer of the formula (II)

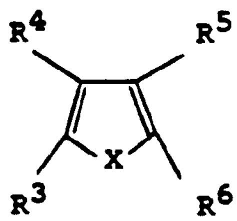

(II)

in which
$R^4$ and $R^5$ independently of one another are a hydrogen atom, a halogen atom, a $C_1$-$C_{12}$-alkyl group or aryl or, together with the carbon atoms linking them, form an aromatic ring,
$R^3$ and $R^6$ independently of one another are a hydrogen atom or $R^3$ together with $R^4$ and the carbon atoms linking them or $R^5$ together with $R^6$ and the carbon atoms linking them in each case form an aromatic ring,
X is an oxygen atom, a sulfur atom, an =NH group, an =N-alkyl group or an =N-aryl group,
of 0 to 40% by weight of structural units which are derived from at least one monomer of the formula (III)

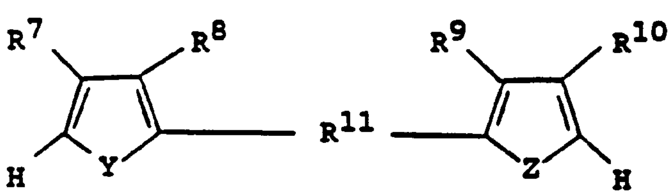

(III)

in which
$R^7$, $R^8$, $R^9$ and $R^{10}$ independently of one another are a hydrogen atom, a $C_1$-$C_{12}$-alkyl group, a $C_1$-$C_{12}$-alkoxy group or an aryl group,
Y and Z independently of one another are an oxygen atom, a sulfur atom, an =NH group, an =N-alkyl group or an =N-aryl group and
$R^{11}$ is an arylene group, a heteroarylene group or a conjugated system of the formula $(CH=CH)_o$, where o is zero, 1, 2 or 3,
of 0 to 40% by weight of structural units which are derived from at least one monomer of the formula (IV)

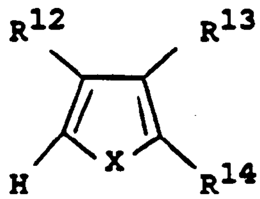

(IV)

in which
$R^{12}$ and $R^{13}$ independently of one another are a hydrogen atom, a halogen atom, a $C_1$-$C_{12}$-alkyl group, a $C_1$-$C_{12}$-alkoxy group, a $C_1$-$C_4$-alkylamino group or a $C_1$-$C_4$-acylamino group,
$R^{14}$ is a halogen atom, a $C_1$-$C_{12}$-alkyl group, a $C_1$-$C_{12}$-alkoxy group, a $C_1$-$C_4$-alkylamino group or a $C_1$-$C_4$-acylamino group and
X is as defined above,
the polymer in the oxidized form being completely soluble in acetonitrile at 25°C and solutions with a content of at least 0.1 g of polymer in 100 ml of acetonitrile being obtained at 25°C, by electrochemical polymerization of at least one monomer of the formula (I), if desired together with comonomers, in a dipolar aprotic electrolyte solvent, in the presence of a conductive salt, wherein the anode has a specific surface area of at least 0.01 $m^2/g$, and the electrolyte system is moved only slightly or not at all relative to the anode, at a flow rate of less than 1 cm/s.

2. The process as claimed in claim 1, wherein the anode consists of carbon with a network, sponge, fabric or felt structure, the reaction temperature is in the range from -60 to 80°C and the monomer concentration is 0.01 to 5 mol/l of electrolyte solvent.

3. The process as claimed in claim 1, wherein the reaction temperature is in the range from -20 to 40°C.

4. The process as claimed in claim 1, wherein the monomer concentration is 0.05 to 1 mol/l of electrolyte solvent.

5. The process as claimed in claim 1, wherein the conductive salt used is a tetraalkylammonium tetrafluoroborate in a quantity of 0.01 to 1 mol/l of electrolyte.

6. The use of an intrinsically electrically conductive polymer as claimed in claim 1 for mixing into plastic and for coating electrically conductive and non-conductive materials for the production of catalysts, electric switches, semiconductor components, solar cells, screening materials, camouflage paints, panel heater conductors, special electrodes and antistatic films and fibers.

## Revendications

### Revendications pour les Etats contractants suivants : BE, CH, LI, DE, FR, GB, IT, LU, NL, SE

1. Polymère intrinsèquement électroconducteur ayant des unités constitutives qui sont reliées les unes aux autres par une liaison en position 2 et/ou en position 5, composé en moyenne statistique
de 60 à 100 % en masse d'unités constitutives dérivant d'au moins un monomère de formule (I)

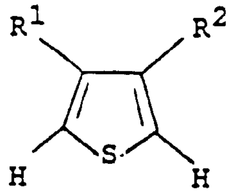

(I),

dans laquelle
$R^1$ représente un groupe alcoxy en $C_1$-$C_{12}$ ou $-O(CH_2CH_2O)_nCH_3$ avec n = 1 à 4, et $R^2$ représente un atome

d'hydrogène, un groupe alkyle en $C_1$-$C_{12}$, un groupe alcoxy en $C_1$-$C_{12}$ ou $-O(CH_2CH_2O)_nCH_3$ avec n = 1 à 4,
ou bien $R^1$ représente avec $R^2$ un groupe $-O(CH_2)_m-CH_2-$ ou $-O(CH_2)m-O-$, où m = 1 à 12,

de 0 à 40 % en masse d'unités constitutives dérivant d'au moins un monomère de formule (II)

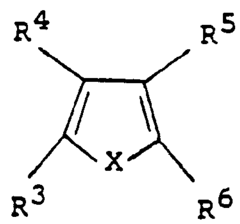

(II),

dans laquelle $R^4$ et $R^5$ représentent indépendamment l'un de l'autre un atome d'hydrogène, un atome d'halogène, un groupe alkyle en $C_1$-$C_{12}$ ou un aryle, ou forment ensemble, avec les atomes de carbone auxquels ils sont liés, un noyau aromatique,
$R^3$ et $R^6$ représentent indépendamment l'un de l'autre un atome d'hydrogène, ou $R^3$ avec $R^4$ et les atomes de carbone auxquels ils sont liés, ou $R^5$ avec $R^6$ et les atomes de carbone auxquels ils sont liés, forment respectivement un noyau aromatique,
X représente un atome d'oxygène, un atome de soufre, un groupe =NH, un groupe =N-alkyle ou un groupe =N-aryle,

de 0 à 40 % en masse d'unités constitutives dérivant d'au moins un monomère de formule (III)

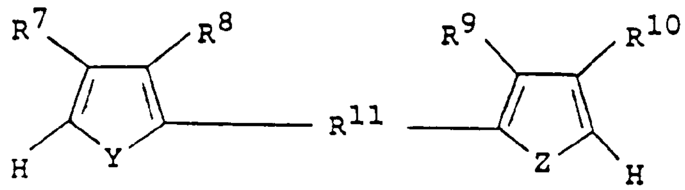

(III),

dans laquelle $R^7$, $R^8$, $R^9$ et $R^{10}$ représentent indépendamment les uns des autres un atome d'hydrogène, un groupe alkyle en $C_1$-$C_{12}$, un groupe alcoxy en $C_1$-$C_{12}$ ou un groupe aryle,
Y et Z représentent indépendamment l'un de l'autre un atome d'oxygène, un atome de soufre, un groupe =NH, un groupe =N-alkyle ou un groupe =N-aryle,
$R^{11}$ représente un groupe arylène, un groupe hétéroarylène ou un système conjugué de formule $(CH=CH)_o$, où o est zéro, 1, 2 ou 3,

de 0 à 40 % en masse d'unités constitutives dérivant d'au moins un monomère de formule (IV)

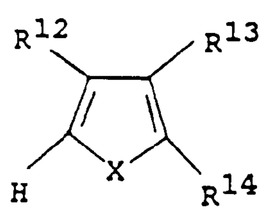

(IV),

dans laquelle $R^{12}$ et $R^{13}$ représentent indépendamment l'un de l'autre un atome d'hydrogène, un atome d'halogène, un groupe alkyle en $C_1$-$C_{12}$, un groupe alcoxy en $C_1$-$C_{12}$, un groupe alkylamino en $C_1$-$C_4$ ou un groupe acylamino en $C_1$-$C_4$,
$R_{14}$ représente un atome d'halogène, un groupe alkyle en $C_1$-$C_{12}$, un groupe alcoxy en $C_1$-$C_{12}$, un groupe alkylamino en $C_1$-$C_4$ ou un groupe acylamino en $C_1$-$C_4$, et
X a la signification donnée précédemment,

le polymère sous forme oxydée étant entièrement soluble dans l'acétonitrile à 25°C, donnant des solutions ayant une teneur d'au moins 0,1 g de polymère dans 100 ml d'acétonitrile à 25°C.

**2.** Polymère électroconducteur selon la revendication 1, caractérisé en ce qu'il est formé de trois à dix unités

constitutives.

3. Polymère intrinsèquement électroconducteur selon la revendication 1, caractérisé en ce que l'un au moins des deux groupes terminaux est formé d'une unité constitutive dérivant de composés de formule (IV)

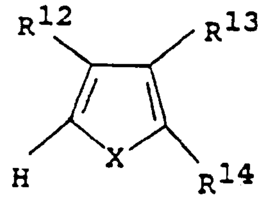

(IV),

dans laquelle $R^{12}$ et $R^{13}$ représentent indépendamment l'un de l'autre un atome d'hydrogène, un atome d'halogène, un groupe alkyle en $C_1$-$C_{12}$ ou un groupe alcoxy en $C_1$-$C_{12}$, et
$R^{14}$ représente un atome d'halogène, un groupe alkyle en $C_1$-$C_{12}$ ou un groupe alcoxy en $C_1$-$C_{12}$, et
X a la signification donnée dans la revendication 1.

4. Polymère intrinsèquement électroconducteur selon la revendication 1, caractérisé en ce que, dans la formule (I), $R^1$ est $OCH_3$ ou $OC_2H_5$ et $R^2$ est H.

5. Polymère intrinsèquement électroconducteur selon la revendication 1, caractérisé en ce que l'on peut obtenir des solutions ayant une concentration en polymère d'au moins 1,0 g dans 100 ml d'acétonitrile à 25°C.

6. Polymère intrinsèquement électroconducteur selon la revendication 1, caractérisé en ce que sa conductibilité électrique est comprise entre $10^{-4}$ et 100 S/cm.

7. Procédé de préparation du polymère intrinsèquement électroconducteur selon la revendication 1, par polymérisation électrochimique d'au moins un monomère de formule (1), éventuellement avec des comonomères, dans un solvant d'électrolyte dipolaire aprotique, en présence d'un sel conducteur, caractérisé en ce que l'anode a une surface spécifique d'au moins 0,01 $m^2/g$ et en ce que le système d'électrolyte n'est pas en mouvement ou n'est que faiblement en mouvement par rapport à l'anode, avec une vitesse d'écoulement inférieure à 1 cm/s.

8. Procédé selon la revendication 7, caractérisé en ce que l'anode est constituée de carbone ayant une structure en réseau, en éponge, en tissu ou en feutre, en ce que la température de la réaction se situe entre -60 et 80°C, et en ce que la concentration en monomère est comprise entre 0,01 et 5 moles/l de solvant d'électrolyte.

9. Polymère intrinsèquement électroconducteur selon la revendication 1, caractérisé en ce que, pour compenser la charge positive, le polymère sous forme oxydée contient un nombre d'anions représentant 15 % à 30 % du nombre d'unités monomères.

10. Polymère intrinsèquement électroconducteur selon la revendication 1, caractérisé en ce que le polymère sous forme oxydée contient des anions tétrafluoroborate, hexafluorophosphate ou trifluorométhanesulfonate.

**Revendications pour les Etats contractants suivants : AT, ES, GR**

1. Procédé de préparation d'un polymère intrinsèquement électroconducteur ayant des unités constitutives qui sont reliées les unes aux autres par une liaison en position 2 et/ou en position 5, composé en moyenne statistique

de 60 à 100 % en masse d'unités constitutives dérivant d'au moins un monomère de formule (I)

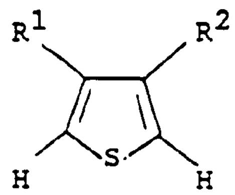

(I),

dans laquelle
$R^1$ représente un groupe alcoxy en $C_1$-$C_{12}$ ou $-O(CH_2CH_2O)_nCH_3$ avec n = 1 à 4, et $R^2$ représente un atome d'hydrogène, un groupe alkyle en $C_1$-$C_{12}$, un groupe alcoxy en $C_1$-$C_{12}$ ou $-O(CH_2CH_2O)_nCH_3$ avec n = 1 à 4,
ou bien $R^1$ représente avec $R^2$ un groupe $-O(CH_2)_m-CH_2-$ ou $-O(CH_2)_m-O-$, où m = 1 à 12,

de 0 à 40 % en masse d'unités constitutives dérivant d'au moins un monomère de formule (II)

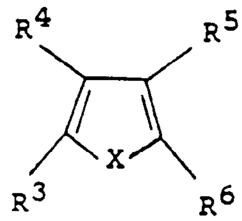

(II),

dans laquelle $R^4$ et $R^5$ représentent indépendamment l'un de l'autre un atome d'hydrogène, un atome d'halogène, un groupe alkyle en $C_1$-$C_{12}$ ou un aryle, ou forment ensemble, avec les atomes de carbone auxquels ils sont liés, un noyau aromatique,
$R^3$ et $R^6$ représentent indépendamment l'un de l'autre un atome d'hydrogène, ou $R^3$ avec $R^4$ et les atomes de carbone auxquels ils sont liés, ou $R^5$ avec $R^6$ et les atomes de carbone auxquels ils sont liés, forment respectivement un noyau aromatique,
X représente un atome d'oxygène, un atome de soufre, un groupe =NH, un groupe =N-alkyle ou un groupe =N-aryle,

de 0 à 40 % en masse d'unités constitutives dérivant d'au moins un monomère de formule (III)

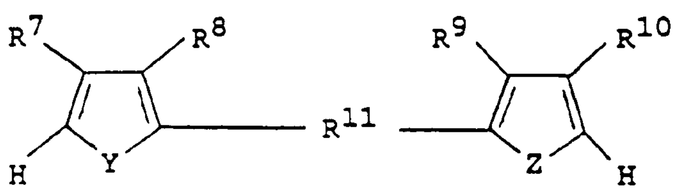

(III),

dans laquelle $R^7$, $R^8$, $R^9$ et $R^{10}$ représentent indépendamment les uns des autres un atome d'hydrogène, un groupe alkyle en $C_1$-$C_{12}$, un groupe alcoxy en $C_1$-$C_{12}$ ou un groupe aryle,
Y et Z représentent indépendamment l'un de l'autre un atome d'oxygène, un atome de soufre, un groupe =NH, un groupe =N-alkyle ou un groupe =N-aryle,
$R^{11}$ représente un groupe arylène, un groupe hétéroarylène ou un système conjugué de formule $(CH=CH)_o$, où o est zéro, 1, 2 ou 3,

de 0 à 40 % en masse d'unités constitutives dérivant d'au moins un monomère de formule (IV)

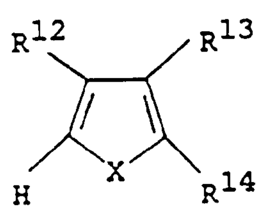

(IV),

dans laquelle $R^{12}$ et $R^{13}$ représentent indépendamment l'un de l'autre un atome d'hydrogène, un atome d'halogène, un groupe alkyle en $C_1$-$C_{12}$, un groupe alcoxy en $C_1$-$C_{12}$, un groupe alkylamino en $C_1$-$C_4$ ou un groupe acylamino en $C_1$-$C_4$,
$R^{14}$ représente un atome d'halogène, un groupe alkyle en $C_1$-$C_{12}$, un groupe alcoxy en $C_1$-$C_{12}$, un groupe alkylamino en $C_1$-$C_4$ ou un groupe acylamino en $C_1$-$C_4$, et
X a la signification donnée précédemment,

le polymère sous forme oxydée étant entièrement soluble dans l'acétonitrile à 25°C, donnant des solutions ayant une teneur d'au moins 0,1 g de polymère dans 100 ml d'acétonitrile à 25°C,

par polymérisation électrochimique d'au moins un monomère de formule (I), éventuellement avec des comonomères, dans un solvant d'électrolyte dipolaire aprotique, en présence d'un sel conducteur, caractérisé en ce que l'anode a une surface spécifique d'au moins 0,01 $m^2/g$ et en ce que le système d'électrolyte n'est pas en mouvement ou n'est que faiblement en mouvement par rapport à l'anode, avec une vitesse d'écoulement inférieure à 1 cm/s.

**2.** Procédé selon la revendication 1, caractérisé en ce que l'anode est constituée de carbone ayant une structure en réseau, en éponge, en tissu ou en feutre, en ce que la température de la réaction se situe entre -60 et 80°C, et en ce que la concentration en monomère est comprise entre 0,01 et 5 moles/l de solvant d'électrolyte.

**3.** Procédé selon la revendication 1, caractérisé en ce que la température de la réaction est comprise entre -20 et 40°C.

**4.** Procédé selon la revendication 1, caractérisé en ce que la concentration en monomère est de 0,05 à 1 mole/l de solvant d'électrolyte.

**5.** Procédé selon la revendication 1, caractérisé en ce que l'on utilise comme sel conducteur un tétrafluoroborate de tétraalkylammonium en une quantité de 0,01 à 1 mole/l d'électrolyte.

**6.** Utilisation du polymère intrinsèquement électroconducteur préparé selon la revendication 1 pour l'incorporation dans une matière plastique ou pour le revêtement de matériaux conducteurs ou non conducteurs de l'électricité en vue de la préparation de catalyseurs, d'interrupteurs électriques, de composants de semi-conducteurs, de cellules solaires, de matières de blindage, de peintures de camouflage, de bandes chauffantes de grande surface, d'électrodes spéciales et de feuilles et de fibres conductrices ou antistatiques.